# EUROPEAN PATENT SPECIFICATION

(11) **EP 2 959 156 B1**
(45) Date of publication and mention of the grant of the patent: **07.02.2018**
(21) Application number: 14824142.5
(22) Date of filing: 11.12.2014
(51) Int. Cl.: H02P 6/185, F02N 11/06, F02N 11/08, H02P 6/22, F02N 11/04

(54) **FOUR-STROKE ENGINE UNIT FOR USE IN VEHICLE AND VEHICLE**
VIERTAKT MOTOR ZUR VERWENDUNG IN EINEM FAHRZEUG UND FAHRZEUG
MOTEUR À QUATRE TEMPS POUR UTILISATION DANS UN VEHICULE ET VEHICULE

(30) Priority: 20.12.2013 JP 2013263307; 28.11.2014 JP 2014240804
(43) Date of publication of application: 30.12.2015
(73) Proprietor: Yamaha Hatsudoki Kabushiki Kaisha, Iwata-shi, Shizuoka 438-8501 (JP)
(72) Inventor: NISHIKAWA, Takahiro, Iwata-shi, Shizuoka 438-8501 (JP); HINO, Haruyoshi, Iwata-shi, Shizuoka 438-8501 (JP)
(74) Representative: Stöckeler, Ferdinand
(86) International application number: PCT/JP2014/083499
(87) International publication number: WO 2015/093554

(56) References cited:
- EP-A1- 0 952 335
- WO-A1-94/27359
- US-A1- 2011 049 880

## Description

### Technical Field

The present invention relates to a four-stroke engine unit for use in vehicle and also relates to a vehicle.

### Background Art

An engine unit mounted to a vehicle such as a motorcycle typically includes a starter motor. The starter motor is, at a time of engine start, supplied with power and driven by a battery provided in the vehicle, to rotate a crankshaft so that an engine is started. At a time of engine start, a gas in a cylinder is compressed in a compression stroke, and, along with this, a resistance to rotation of the crankshaft increases in the compression stroke. The starter motor needs to rotate the crankshaft with overcoming of a high-load region of the compression stroke.

Since the starter motor is mounted to a vehicle such as a motorcycle, it is necessary that the starter motor is suitable for being mounted to a vehicle. More specifically, for example, the starter motor should have a size suitable for being mounted to a vehicle. It is desirable that the starter motor has a small size from the viewpoint of vehicle mountability and the like.

It is therefore demanded that the starter motor satisfy both of requirements that the starter motor should be suitable for being mounted to a vehicle and that the starter motor should be able to output a torque required for rotating a crankshaft with overcoming of a high-load region of a compression stroke.

Patent Literature 1 (PTL1) discloses a four-cycle engine unit that causes a significant load variation during four strokes so that the load in a high-load region and the load in a low-load region largely differ. The Patent Literature 1 proposes adoption of a three-phase brushless motor as a starter motor of an engine unit. The engine unit disclosed in the Patent Literature 1 includes a Hall IC that detects the position of a rotor of the starter motor. The engine unit disclosed in the Patent Literature 1 includes a control device that starts an engine by controlling conduction in the motor based on information of the rotor position detected by the Hall IC. In the Patent Literature 1, the Hall IC is arranged in a stator of the starter motor. A magnet ring facing the Hall IC is arranged in the rotor of the starter motor. The magnet ring includes N poles and S poles alternately arranged at regular intervals in a circumferential direction. The control device detects the rotor position based on a signal that the Hall IC generates in accordance with the magnetic poles of the magnet ring. The control device controls conduction of stator coils based on the rotor position.

The Hall IC utilizes the Hall effect to detect a magnetic field. Therefore, the control device is able to detect the rotor position even when the rotor is stopped. That is, the control device including the Hall IC is able to control conduction of the stator coils at appropriate conduction timings even when the rotor is stopped. This enables the control device including the Hall IC to generate a high torque under a state where the starter motor is stopped. Thus, the control device including the Hall IC is capable of an accelerated increase in the speed of rotation of the starter motor. As a result, it takes a short time before the engine is ignited. Accordingly, the control device of the Patent Literature 1 improves the capability of quick start of the engine by providing the Hall IC.

Recently, it is demanded that a control device capable of causing quick start of an engine be mounted in an air-cooled engine as well as a water-cooled engine.

Patent Literature 2 (PTL2) discloses an air-cooled engine unit in which a control device including a Hall IC is mounted. The engine unit has the Hall IC provided on an electronic board that is arranged between an engine case and a starter motor.

### Citation List

### Patent Literature

PTL1: Japanese Patent Application Laid-Open No. 2003-343404
PTL2: Japanese Patent Application Laid-Open No. 2013-72358

### Summary of Invention

### Technical Problem

An air-cooled engine is an engine configured such that heat is dissipated to the atmosphere from a cooling fin provided on an outer surface of the engine. An engine of an air-cooled engine unit, in which cooling with a coolant is not carried out, may sometimes reach a temperature exceeding the upper limit temperature of a Hall IC. To protect the Hall IC from a high-temperature environment of the engine, the control device disclosed in the Patent Literature 2 adopts the following configuration. A housing with an electronic board arranged therein is provided with a heatsink. A heat insulating material is provided between the electronic board and an engine case. Additionally, a passage that allows a wind generated by a blower fan provided to a crankshaft of an engine to flow therethrough is formed between the electronic board and the engine case. The control device disclosed in the Patent Literature 2, with its structure devised, ensures a heat resistance of the Hall IC, for improvement in the capability of quick start of the engine.

The structure of the engine unit disclosed in the Patent Literature 2, however, is complicated because of the need to protect the Hall IC. This leads to a decrease in the vehicle mountability, though the startability and heat resistance can be ensured.

An object of the present invention is to provide a four-stroke engine unit for use in vehicle, in which the capability of quick start and the vehicle mountability of the four-stroke engine having a load variation are improved irrespective of the manner of cooling the engine. Another object of the present invention is to provide the vehicle equipped with such four-stroke engine.

### Solution to Problem

To solve the problems described above, the present invention adopts the following configurations.

(1) An engine unit mounted to a vehicle, the engine unit including:
   a four-stroke engine body including, during four strokes with combustion stopped, a high-load region in which a load on rotation of a crankshaft is high and a low-load region in which a load on rotation of the crankshaft is lower than that of the high-load region, the high-load region including a compression stroke, the low-load region including no compression stroke, the low-load region being wider than or equal to the high-load region;
   a starter motor including an inner stator and an outer rotor, the inner stator including a stator core and multi-phase stator windings, the stator core including a plurality of teeth provided at intervals with respect to a circumferential direction, the multi-phase stator windings being wound on the plurality of teeth, the outer rotor including a permanent magnet part and a back yoke portion, the permanent magnet part being arranged outside the inner stator with respect to a radial direction, the permanent magnet part including, on a surface thereof facing the inner stator, a plurality of magnetic pole faces that are arranged in the circumferential direction, the back yoke portion being arranged outside the permanent magnet part with respect to the radial direction, the outer rotor being rotated along with rotation of the crankshaft; and
   a control device connected to the multi-phase stator windings of the inner stator, the control device supplying a current from a battery included in the vehicle to the multi-phase stator windings,
   the control device including
      a plurality of detection object parts provided on an outer surface of the outer rotor and arranged at intervals with respect to the circumferential direction,
      a rotor position detection device provided at a position facing each of the plurality of detection object parts during rotation of the outer rotor, the rotor position detection device including a detection-purpose winding provided separately from the stator windings, and
      a plurality of switching parts connected to the multi-phase stator windings, the plurality of switching parts switching, by on/off-operation thereof, allowing and blocking of a current flow between the multi-phase stator windings and the battery,
   the control device shifting from a control mode for starting forward rotation of the crankshaft to a control mode for accelerating the rotation of the crankshaft, the control mode for starting forward rotation of the crankshaft being a mode in which, in a state where the crankshaft is stopped, rotation of the crankshaft is started by performing on/off-operation of the plurality of switching parts at predefined timings to supply a current to the multi-phase stator windings, the control mode for accelerating the rotation of the crankshaft being a mode in which the forward rotation of the crankshaft is accelerated by performing on/off-operation of the plurality of switching parts at timings to supply a current to the multi-phase stator windings, the timings being based on an electrical signal flowing in the detection-purpose winding of the rotor position detection device, the electrical signal varying depending on a variation in magnetic condition caused by movement of the plurality of detection object parts along with the forward rotation of the crankshaft.

   The engine unit mounted to vehicle according to (1) includes the four-stroke engine body having, during four strokes, the high-load region and the low-load region. The high-load region is a rotation angle region in which a load on rotation of the crankshaft is high. The high-load region includes the compression stroke. The low-load region is a rotation angle region in which a load on rotation of the crankshaft is lower than that of the high-load region. The low-load region includes no compression stroke. The four-stroke engine body having the high-load region and the low-load region during the four strokes has such characteristics that a torque required for rotating the crankshaft varies significantly. Another way of looking at this is that the four-stroke engine body having the low-load region wider than or equal to the high-load region has such characteristic that a torque variation is small in the low-load region that is wider than the high-load region.
   In the configuration of (1), the control device controls the starter motor based on the electrical signal flowing in the detection-purpose winding of the rotor position detection device, the electrical signal varying depending on a variation in the magnetic condition caused by movement of the plurality of detection object parts that are provided on the outer rotor. In the rotor position detection device having such configuration, the electrical signal flowing in the detection-purpose winding generally does not vary in a state where the detection object parts are stopped. The state where the detection object parts are stopped means a state where the detection object parts are not moved. The detection-purpose winding is provided separately from the stator windings, and therefore the detection-purpose winding is not under a structural restriction involved in the need to ensure performance (for example, the capability of quick start of the engine) of the starter motor. Accordingly, devising the structure of the detection-purpose winding leads to achievement of a configuration that enables the electrical signal to flow in the detection-purpose winding even when the rotation speed is extremely low immediately after the rotation is started. Since the plurality of detection object parts are provided on the outer surface of the outer rotor, a large movement of the detection object parts is obtained even when the rotation speed of the crankshaft is extremely low immediately after the rotation is started. This enables the electrical signal to flow in the detection-purpose winding even when the rotation speed is extremely low immediately after the rotation is started.
   In the configuration of (1), in a state where the crankshaft is stopped, forward rotation of the crankshaft is started by performing on/off-operation of the plurality of switching parts at predefined timings to supply a current to the multi-phase stator windings. Then, the crankshaft of the four-stroke engine having a load variation is rotated by supplying a current to the multi-phase stator windings based on the electrical signal in the detection-purpose winding, the electrical signal varying along with the forward rotation of the crankshaft. The engine unit of (1) is configured to detect the position of the rotor and configured to shift the control mode. Accordingly, once the crankshaft starts forward rotation, the capability of quick start that is comparable to the capability of quick start of an engine unit including a Hall IC can be ensured even when the rotation speed is low.
   Here, the "forward rotation" means rotation in the direction in which the crankshaft is rotated upon combustion of the four-stroke engine body.
   The configuration of (1) has an excellent heat resistance, because it adopts the rotor position detection device including the detection-purpose winding provided separately from the stator windings. Additionally, the plurality of detection object parts are provided on the outer surface of the outer rotor, and the rotor position detection device including the detection-purpose winding provided separately from the stator windings is arranged at a position facing each of the detection object parts during rotation of the outer rotor. This increases the degree of design freedom of a place where the rotor position detection device is installed. Accordingly, a structure for cooling the rotor position detection device including the detection-purpose winding can be simplified.
   The configuration of (1) is able to improve the capability of quick start and the vehicle mountability of the four-stroke engine having a load variation, irrespective of the manner of cooling the engine.
(2) The engine unit according to (1), wherein
   the control device shifts from the control mode for starting forward rotation of the crankshaft to the control mode for accelerating the forward rotation of the crankshaft, based on an electrical signal in the detection-purpose winding of the rotor position detection device, the electrical signal varying depending on a variation in magnetic condition caused by movement of the plurality of detection object parts.
   In the configuration of (2), once the crankshaft starts rotation, the control mode is shifted based on the varying electrical signal in the detection-purpose winding, even when the rotation speed is low. This makes it possible that shifting to the control mode for accelerating the forward rotation of the crankshaft is made at an earlier stage. Accordingly, irrespective of the manner of cooling the engine, further improvement in the capability of quick start of the four-stroke engine having a load variation is obtained with improvement in the vehicle mountability.
(3) The engine unit according to (1) or (2), wherein
   the control device includes:
   a plurality of detection object parts provided on an outer surface of the outer rotor, the plurality of detection object parts each having the same positional relationship relative to a corresponding one of magnetic pole face pairs each including a pair of magnetic pole faces; and
   a rotor position detection device provided at a position facing each of the plurality of detection object parts during rotation of the outer rotor, the plurality of detection object parts each having the same positional relationship relative to the corresponding one of the magnetic pole face pairs, the rotor position detection device including a detection-purpose winding provided separately from the stator windings,
   the control device accelerates the forward rotation of the crankshaft by performing on/off-operation of the plurality of switching parts at timings to supply a current to the multi-phase stator windings, the timings being based on an electrical signal flowing in the detection-purpose winding of the rotor position detection device, the electrical signal varying depending on a variation in magnetic condition caused by movement, along with the forward rotation of the crankshaft, of the plurality of detection object parts each having the same positional relationship relative to the corresponding one of the magnetic pole face pairs.
   In the configuration of (3), the plurality of detection object parts each has the same positional relationship relative to the corresponding one of the magnetic pole face pairs. In other words, each of the detection object parts corresponds to each of the magnetic pole face pairs. The relative positional relationship between the detection object part and the magnetic pole face pair is the same for all the plurality of detection object parts. Therefore, correlating a variation in the electrical signal in the detection-purpose winding with the electrical angle of the starter motor is easy. This makes it possible to supply a current in accordance with a variation in the electrical signal in the detection-purpose winding. Accordingly, irrespective of the manner of cooling the engine, further improvement in the capability of quick start of the four-stroke engine having a load variation is obtained with improvement in the vehicle mountability.
(4) The engine unit according to any one of (1) to (3), wherein
   the control device includes:
   a plurality of detection object parts provided on an outer surface of the outer rotor, the plurality of detection object parts being arranged at angular intervals of [360 degrees / (a positive divisor of the number of magnetic pole face pairs, the positive divisor greater than one)] with respect to the circumferential direction; and
   a rotor position detection device provided at a position facing each of the plurality of detection object parts during rotation of the outer rotor, the plurality of detection object parts provided on the outer surface of the outer rotor at angular intervals of [360 degrees / (a positive divisor of the number of magnetic pole face pairs, the positive divisor greater than one)] with respect to the circumferential direction, the rotor position detection device including a detection-purpose winding provided separately from the stator windings,
   the control device accelerates the forward rotation of the crankshaft by performing on/off-operation of the plurality of switching parts at timings to supply a current to the multi-phase stator windings, the timings being based on an electrical signal flowing in the detection-purpose winding of the rotor position detection device, the electrical signal varying depending on a variation in magnetic condition caused by movement, along with the forward rotation of the crankshaft, of the plurality of detection object parts provided on the outer surface of the outer rotor at angular intervals of [360 degrees / (a positive divisor of the number of magnetic pole face pairs, the positive divisor greater than one)] with respect to the circumferential direction.
   In the configuration of (4), the plurality of detection object parts are arranged at angular intervals of [360 degrees / (a positive divisor of the number of magnetic pole face pairs, the positive divisor greater than one)] with respect to the circumferential direction. Therefore, correlating a variation in the electrical signal in the detection-purpose winding with the electrical angle of the starter motor is easy. This makes it possible to supply a current in accordance with a variation in the electrical signal in the detection-purpose winding. Accordingly, irrespective of the manner of cooling the engine, further improvement in the capability of quick start of the four-stroke engine having a load variation is obtained with improvement in the vehicle mountability.
(5) The engine unit according to any one of (1) to (4), wherein
   the control device includes:
   a plurality of detection object parts provided on an outer surface of the outer rotor, the plurality of detection object parts being spaced by a plurality of substantially equal intervals and one different interval from the plurality of substantially equal intervals; and
   a rotor position detection device provided at a position facing each of the plurality of detection object parts during rotation of the outer rotor, the plurality of detection object parts spaced by the plurality of substantially equal intervals and the one different interval from the plurality of substantially equal intervals, the rotor position detection device including a detection-purpose winding provided separately from the stator windings,
   the control device accelerates the forward rotation of the crankshaft by performing on/off-operation of the plurality of switching parts at timings to supply a current to the multi-phase stator windings, the timings being based on an electrical signal flowing in the detection-purpose winding of the rotor position detection device, the electrical signal varying depending on a variation in magnetic condition caused by movement, along with the forward rotation of the crankshaft, of the plurality of detection object parts that are spaced by the plurality of substantially equal intervals and the one different interval from the plurality of substantially equal intervals.
   In the configuration of (5), among the plurality of intervals spacing the plurality of detection object parts from one another, one interval is different from the others. This makes it possible to detect a reference position in one rotation of the crankshaft even though a variation in the electrical signal in the detection-purpose winding is not in one-to-one correspondence with the electrical angle of the starter motor. Therefore, correlating a variation in the electrical signal in the detection-purpose winding with the electrical angle of the starter motor is easy based on the electrical signal in the detection-purpose winding, the electrical signal varying depending on a variation in the magnetic condition caused when at least a large interval and a small interval pass. Accordingly, irrespective of the manner of cooling the engine, further improvement in the capability of quick start of the four-stroke engine having a load variation is obtained with improvement in the vehicle mountability.
(6) The engine unit according to any one of (1) to (5), wherein
   the control device accelerates the forward rotation of the crankshaft by performing on/off-operation of the plurality of switching parts at timings corresponding to 120-degree conduction to supply a current to the multi-phase stator windings, based on an electrical signal flowing in the detection-purpose winding of the rotor position detection device, the electrical signal varying depending on a variation in magnetic condition caused by movement of the plurality of detection object parts along with the forward rotation of the crankshaft.
   In the configuration of (6), on/off-operation of the plurality of switching parts is performed at timings corresponding to the 120-degree conduction. Since on/off-operation of the plurality of switching parts is performed at timings corresponding to the 120-degree conduction, a current is supplied to the multi-phase stator windings while supply and non-supply of the current to each phase of the multi-phase stator windings is repeated, the supply and non-supply of the current to one phase being phase-shifted from the supply and non-supply of the current to another phase. The control device controls two conditions, namely, supplying a current and not supplying a current. This configuration enables the control to be performed through a simple process as compared with, for example, a configuration that dynamically changes a current during a supply time period. Accordingly, the forward rotation of the crankshaft can be accelerated by the control device having a simple configuration.
(7) The engine unit according to any one of (1) to (5), wherein
   the control device accelerates the forward rotation of the crankshaft by performing on/off-operation of the plurality of switching parts by vector control to supply a current to the multi-phase stator windings, based on an electrical signal flowing in the detection-purpose winding of the rotor position detection device, the electrical signal varying depending on a variation in magnetic condition caused by movement of the plurality of detection object parts along with the forward rotation of the crankshaft.
   In the configuration of (7), on/off-operation of the plurality of switching parts is performed by the vector control. Performing on/off-operation of the plurality of switching parts by the vector control causes a sinusoidal current to be supplied to each of the multi-phase stator windings. The supply of the sinusoidal current to each of the multi-phase stator windings reduces a torque variation of the starter motor, which leads to improvement in the power efficiency of the starter motor. The starter motor is supplied with power from the battery provided in the vehicle. The improvement in the power efficiency of the starter motor achieves suppression of consumption of power stored in the battery.
(8) The engine unit according to any one of (1) to (7), wherein
   the control device includes a combustion controller that controls combustion of the four-stroke engine body,
   after shifting from the control mode for starting forward rotation of the crankshaft to the control mode for accelerating the forward rotation of the crankshaft, the control device controls the combustion controller based on an electrical signal in the detection-purpose winding of the rotor position detection device, the electrical signal varying depending on a variation in magnetic condition caused by movement of the plurality of detection object parts provided on the rotor.
   In the configuration of (8), the detection object parts and the rotor position detection device are used for detection of an engine control timing, too. This can lead to a further simplified structure of a vehicle including a vehicle engine starter and an engine.
(9) The engine unit according to any one of (1) to (8), wherein
   after shifting from the control mode for starting forward rotation of the crankshaft to the control mode for accelerating the forward rotation of the crankshaft and starting combustion of the four-stroke engine body, the control device controls a current supplied from the plurality of stator windings to the battery by performing on/off-operation of the plurality of switching parts based on an electrical signal in the detection-purpose winding of the rotor position detection device, the electrical signal varying depending on a variation in magnetic condition caused by movement of the plurality of detection object parts provided on the rotor.
   In the configuration of (9), the starter motor that starts the four-stroke engine body is able to serve also as a generator after combustion of the four-stroke engine body is started. This configuration can downsize the engine unit as compared with, for example, a configuration including a generator for single purpose. As a result, the vehicle mountability is improved. The starter motor serving also as a generator requires an enhanced torque to be outputted at a time of start of the engine body, which involves a situation where undesirably high power is generated by the multi-phase stator windings. In this respect, the detection-purpose winding, which is originally for use at a time of start, and the plurality of switching parts are utilized to achieve an efficient control of the current supplied from the plurality of stator windings W to the battery, without impairing the vehicle mountability.
(10) The engine unit according to any one of (1) to (9), wherein
   during a predetermined time period after starting combustion of the four-stroke engine body, the control device accelerates the forward rotation of the crankshaft by performing on/off-operation of the plurality of switching parts at timings to supply a current to the multi-phase stator windings, the timings being based on an electrical signal flowing in the detection-purpose winding of the rotor position detection device, the electrical signal varying depending on a variation in magnetic condition caused by movement.
   In the configuration of (10), the starter motor accelerates the forward rotation of the crankshaft while the four-stroke engine body is in combustion. Accordingly, the forward rotation of the crankshaft caused by combustion of the four-stroke engine body can be stabilizied. Moreover, at a time of accelerating the vehicle, the forward rotation of the crankshaft caused by combustion of the four-stroke engine body can be accelerated more quickly.
(11) A vehicle including the engine unit according to any one of (1) to (10).
   The vehicle of (11) can be made compact as a whole, because it includes the four-stroke engine unit for use in vehicle having improved vehicle mountability with a simple structure and also having a heat resistance with the capability of quick start ensured.

### Advantageous Effects of Invention

The present invention provides a four-stroke engine unit for use in vehicle, and the vehicle. In the four-stroke engine unit having a load variation, the capability of quick start and the vehicle mountability of the four-stroke engine are improved irrespective of the manner of cooling the engine.

### Brief Description of Drawings

[Fig. 1] Fig. 1 is a cross-sectional view schematically showing an outline configuration of a part of an air-cooled engine unit according to one embodiment of the present invention.
[Fig. 2] Fig. 2 is an illustrative diagram schematically showing the relationship between a crank angle position and a required torque at a time of engine start.
[Fig. 3] Fig. 3 is a cross-sectional view showing, on an enlarged scale, a starter motor shown in Fig. 1 and therearound.
[Fig. 4] Fig. 4 is a cross-sectional view showing a cross-section of the starter motor shown in Fig. 3, as taken along a plane perpendicular to the rotation axis thereof.
[Fig. 5] Fig. 5 is a block diagram showing a basic electrical configuration of the engine unit shown in Fig. 1.
[Fig. 6] Fig. 6 is a flowchart illustrating an operation of the engine unit shown in Fig. 5.
[Fig. 7] Fig. 7 is a timing chart showing exemplary current and voltage at a time of start of a four-stroke engine body.
[Fig. 8] Fig. 8 is a cross-sectional view showing a cross-section of a starter motor of an engine unit according to a second embodiment of the present invention, as taken along a plane perpendicular to the rotation axis of the starter motor.
[Fig. 9] Fig. 9(a) is a cross-sectional view showing, on an enlarged scale, a starter motor and therearound of an engine unit according to a third embodiment of the present invention; and Fig. 9(b) shows an outer rotor as seen in the direction of rotation axis of a crankshaft.
[Fig. 10] Fig. 10 is a diagram showing an external appearance of a vehicle to which the engine unit according to any of the first to third embodiments is mounted.
[Fig. 11] Fig. 11 is a cross-sectional view schematically showing an outline configuration of a part of a water-cooled engine unit according to the present invention.

### Description of Embodiments

Studies that the present inventors have conducted on a control of a starter motor will be described.

As described before, controlling conduction of stator windings in accordance with the rotor position detected by a Hall IC requires a complicated mechanism in order to suppress an influence that heat of a four-stroke engine body gives on the Hall IC having a low heat resistance. Apart from the Hall IC, a magnetoresistive sensor (MR sensor) is also known as one of sensors capable of detecting magnetism. The MR sensor, similarly to the Hall IC, includes a semiconductor element, and therefore the heat resistance of the MR sensor is as low as the Hall IC.

A known method for controlling conduction of a stator winding without using either the Hall IC or the MR sensor includes: detecting an induced voltage in stator windings, to detect the position of permanent magnet parts which means the position of a rotor; and controlling conduction in accordance with the position thus detected. More specifically, in this method, the induced voltage caused in the stator winding by a magnet of the rotor coming close to the stator winding is detected during a time period in which no current is supplied for driving. The induced voltage caused in the stator winding depends on the rotation speed of the rotor and the number of turns of the stator winding. When the rotation speed is low, the induced voltage cannot be detected from the stator winding though it is necessary for controlling conduction. In other words, it takes time for the control of the conduction based on the induced voltage to be enabled. This results in delayed start of the four-stroke engine body.

For example, increasing the number of turns of the stator winding allows the induced voltage to be detectable at a lower rotation speed. Increasing the number of turns of the stator winding, however, causes a problem that a torque required for starting the four-stroke engine body cannot be outputted. This is because, a torque depends on a current supplied from a power source, and a current that the power source is able to supply depends on a difference between a voltage of the power source and an induced voltage. That is, as the rotation speed increases, the induced voltage increases, which decreases the difference between the voltage of the power source and the induced voltage. As a result, the current that the power source is able to supply to the stator winding is reduced. Since increasing the number of turns of the stator winding leads to an increase in the induced voltage, the current that the power source is able to supply to the stator winding is further reduced. As a result, an increase in the rotation speed causes a decrease in the output torque.

For example, in a motor adapted for merely a low output torque required, increasing the number of turns of a stator winding is allowed, which enables an induced voltage to be detected even at a low rotation speed. Such a motor with a low output torque, however, is not able to provide a torque output sufficient for starting the four-stroke engine body.

Additionally, the method including detection of an induced voltage of stator windings involves a problem that detection of the induced voltage is difficult even in a region with a high rotation speed. This method detects the induced voltage in the stator windings during a time period in which no current is supplied. Here, the stator winding has an electrical inductance. Therefore, a current having the same direction as the direction of a current that has been supplied during driving still flows in the stator winding even after the current supply is stopped. Although the current caused by the inductance decreases over time, the decrease in the current caused by the inductance takes time. Thus, when the rotation speed is high, and in other words, when conduction occurs at a high frequency, a time period that is originally supposed to be a time period in which the current supply is stopped so that voltage detection is allowed, is reduced due to occurrence of a time period in which the current keeps flowing because of the inductance. This makes detection of the induced voltage difficult even in a region with a high rotation speed. In the method including detection of the induced voltage in the stator winding, as described above, as the number of turns of the stator winding is increased for the purpose of enabling detection of the induced voltage at a low rotation speed, the inductance increases to make detection at a high rotation speed more difficult.

The present inventors have found out that: detecting the rotor position by using a detection-purpose winding that is separate from stator windings makes it possible to ensure a sufficient number of turns because the winding used for detection is not under the restriction related to the output torque, and therefore the rotor position is detectable in a low-speed rotation, so that controlling conduction in accordance with information of the rotor position is enabled at an early stage after the beginning of the start, while a decrease in output torque is suppressed. A current for driving is not supplied to the detection-purpose winding that is provided separately from the stator windings. Thus, the problem that a current caused by an inductance keeps flowing is less likely to occur. That is, even when an inductance increases, a problem hindering the detection is less likely to occur. Accordingly, use of the detection-purpose winding makes it possible to ensure a number of turns that enables detection at a low rotation speed. A rotor position detection device including such a detection-purpose winding is able to detect the rotor position at a low rotation speed, by starting rotation of the rotor based on a control that renders stator windings conducting at predefined timings.

Unlike the Hall IC or the MR sensor, the rotor position detection device that detects the rotor position by using the detection-purpose winding does not necessarily include a semiconductor element, and therefore has a high heat resistance. Accordingly, a heat resistance can be ensured with a simple structure.

Hereunder, the present invention will be described based on preferred embodiments with reference to the drawings.

### [First Embodiment]

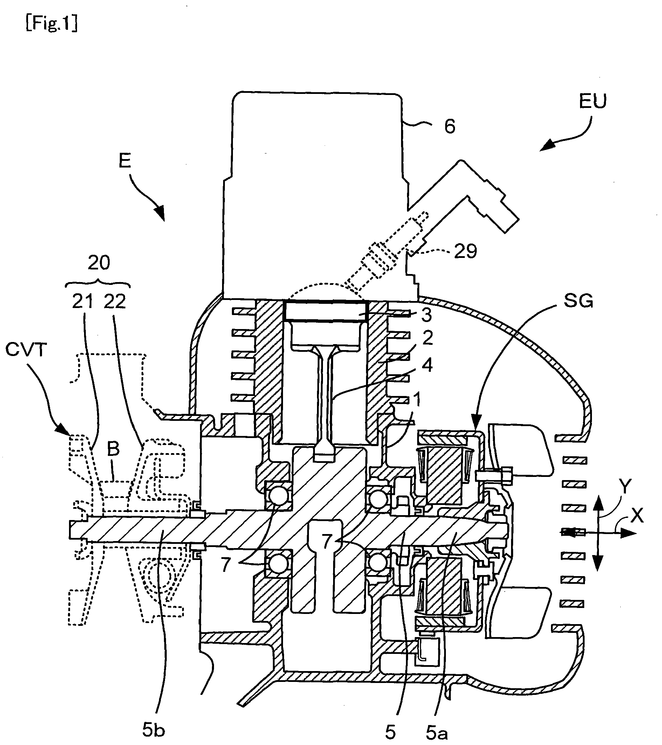

Fig. 1 is a cross-sectional view schematically showing an outline configuration of a part of an engine unit EU including a starter motor SG according to a first embodiment of the present invention. The engine unit EU is a four-stroke engine unit for use in vehicle.

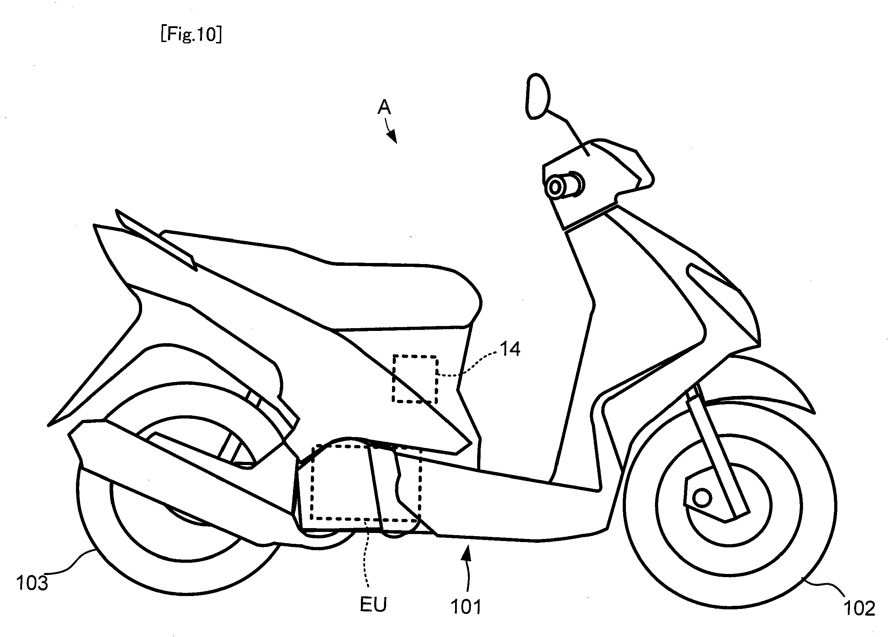

The engine unit EU is installed in a motorcycle (see Fig. 10) that is an example of a vehicle. No particular limitation is put on the motorcycle. Examples of the motorcycle include a scooter type motorcycle, a moped type motorcycle, an off-road type motorcycle, and an on-road type motorcycle. The vehicle is not limited to the motorcycle, and may be an ATV (All-Terrain Vehicle), for example. The vehicle according to the present invention is not limited to a saddle-ride type vehicle, and may be a four-wheeled vehicle including a passenger compartment, for example.

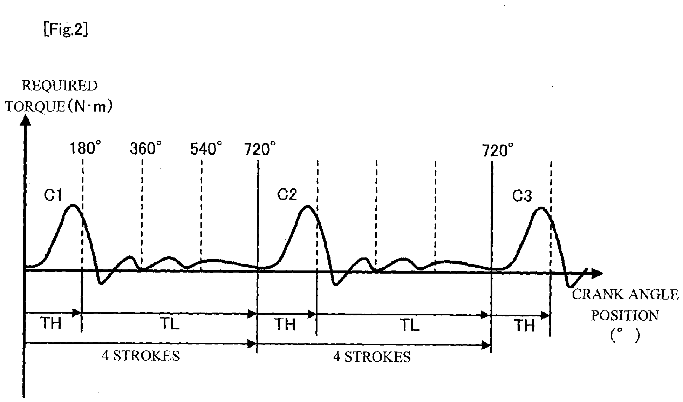

The engine unit EU includes a four-stroke engine body E and a starter motor SG. The four-stroke engine body E is a four-stroke engine having a single cylinder. In the four-stroke engine body E, the relationship shown in Fig. 2 is established between a crank angle position and a required torque.

Fig. 2 is an illustrative diagram schematically showing the relationship between a crank angle position and a required torque at a time of engine start. The four-stroke engine body E includes, during four strokes, a high-load region TH in which a high load is put on rotation of a crankshaft 5 and a low-load region TL in which a load put on rotation of the crankshaft 5 is lower than that of the high-load region TH. From the viewpoint of the rotation angle of the crankshaft 5, the low-load region TL is wider than the high-load region TH. A rotation angle region corresponding to the low-load region TL is wider than a rotation angle region corresponding to the high-load region TH. In more detail, the four-stroke engine body E rotates while repeating four strokes of an intake stroke, a compression stroke, an expansion stroke, and an exhaust stroke. As shown in Fig. 2, the compression stroke is included in the high-load region TH, and not included in the low-load region TL. In the four-stroke engine body E of this embodiment, the high-load region TH is a region that substantially overlaps the compression stroke, and the low-load region TL is a region that substantially overlaps the intake stroke, the expansion stroke, and the exhaust stroke. It is not necessary that the boundary of the high-load region TH and the boundary of the low-load region TL are coincident with the boundary of the corresponding strokes.

As shown in Fig. 1, the engine unit EU includes the starter motor SG. The starter motor SG is a three-phase brushless motor. At a time of engine start, the starter motor SG rotates the crankshaft 5 in the forward direction to start the four-stroke engine body E. At least in a part of the period after the start of the four-stroke engine body E, the starter motor SG is rotated in the forward direction by the crankshaft 5, to function as a generator. In a case where the starter motor SG functions as a generator, it is not indispensable that the starter motor SG functions as a generator all the time after combustion of the engine is started. In an acceptable example, the starter motor SG does not immediately function as a generator after combustion of the engine is started, and the starter motor SG functions as a generator when a predetermined condition is satisfied. Examples of the predetermined condition include a condition that the rotation speed of the engine reaches a predetermined speed and a condition that a predetermined time period elapses after combustion of the engine is started. It may be acceptable that a time period in which the starter motor SG functions as a generator and a time period in which the starter motor SG functions as a motor (such as a vehicle-driving motor) are present after combustion of the engine is started.

The starter motor SG is attached to the crankshaft 5 of the four-stroke engine body E. In this embodiment, the starter motor SG is attached to the crankshaft 5 without interposition of a power transmission mechanism (such as a belt, a chain, a gear, a speed reducer, or a speed increaser). In the present invention, however, it suffices that the starter motor SG is configured such that the crankshaft 5 is rotated in the forward direction by forward rotation of the starter motor SG. The starter motor SG may be attached to the crankshaft 5 with interposition of a power transmission mechanism. In the present invention, it is preferable that the rotation axis of the starter motor SG is substantially coincident with the rotation axis of the crankshaft 5. It is also preferable that the starter motor SG is attached to the crankshaft 5 without interposition of a power transmission mechanism, as illustrated in this embodiment.

The four-stroke engine body E includes a crank case 1 (engine case 1), a cylinder 2, a piston 3, a connecting rod 4, and a crankshaft 5. The cylinder 2 is arranged to protrude from the crank case 1 in a predetermined direction (for example, obliquely upward). The piston 3 is arranged in the cylinder 2 such that the piston 3 is freely movable to and fro. The crankshaft 5 is rotatably arranged in the crank case 1. One end portion (for example, an upper end portion) of the connecting rod 4 is coupled to the piston 3. The other end portion (for example, a lower end portion) of the connecting rod 4 is coupled to the crankshaft 5. A cylinder head 6 is attached to an end portion (for example, an upper end portion) of the cylinder 2. The crankshaft 5 is supported on the crank case 1 via a pair of bearings 7 in a freely rotatable manner. One end portion 5a (for example, a right end portion) of the crankshaft 5 protrudes out of the crank case 1. The starter motor SG is attached to the one end portion 5a of the crankshaft 5.

The other end portion 5b (for example, a left end portion) of the crankshaft 5 protrudes out of the crank case 1. A primary pulley 20 of a continuously variable transmission CVT is attached to the other end portion 5b of the crankshaft 5. The primary pulley 20 includes a fixed sheave 21 and a movable sheave 22. The fixed sheave 21 is fixed to a distal end portion of the other end portion 5b of the crankshaft 5 in such a manner that the fixed sheave 21 rotates together with the crankshaft 5. The movable sheave 22 is splined to the other end portion 5b of the crankshaft 5. Thus, the movable sheave 22 is movable in an axial direction X. The movable sheave 22 is configured to rotate together with the crankshaft 5 with the interval between the movable sheave 22 and the fixed sheave 21 varying. A belt B is wrapped on the primary pulley 20 and a secondary pulley (not shown). A rotation force of the crankshaft 5 is transmitted to a drive wheel of a motorcycle (see Fig. 10). The four-stroke engine body E of this embodiment is an air-cooled engine.

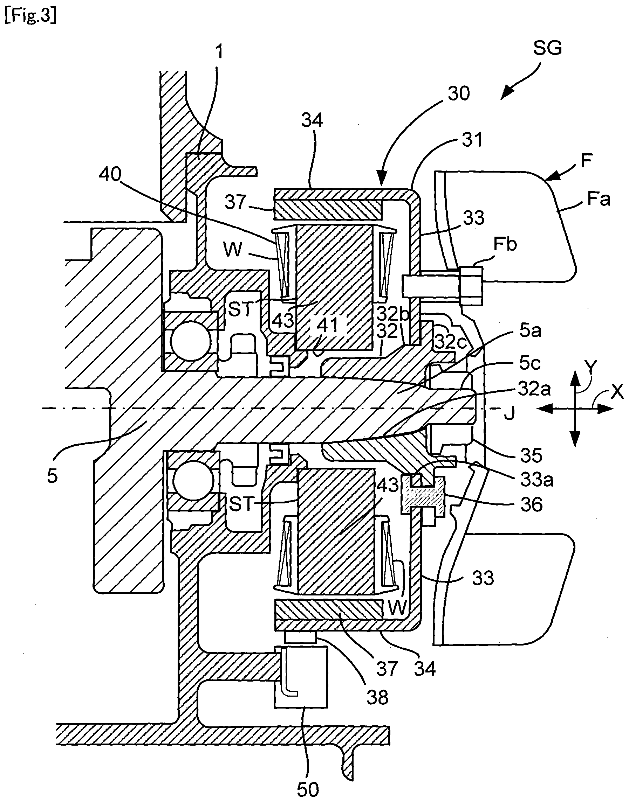

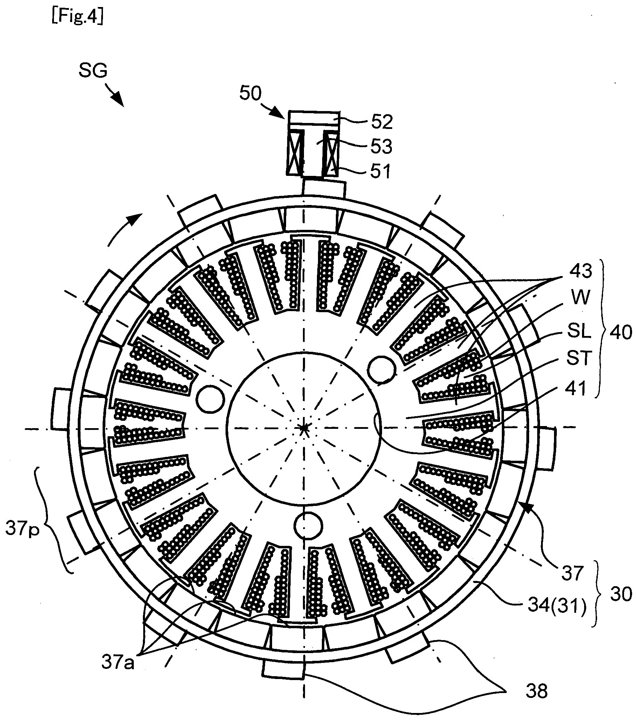

Fig. 3 is a cross-sectional view showing, on an enlarged scale, the starter motor SG shown in Fig. 1 and therearound. Fig. 4 is a cross-sectional view showing a cross-section of the starter motor SG, as taken along a plane perpendicular to a rotation axis J shown in Fig. 3.

The starter motor SG includes an outer rotor 30, an inner stator 40, and a magnetic sensor unit (not shown). The outer rotor 30 includes an outer rotor main body part 31. The outer rotor main body part 31 is made of, for example, a ferromagnetic material. The outer rotor main body part 31 is in the shape of a cylinder with a bottom. The outer rotor main body part 31 includes a cylindrical boss portion 32, a disk-shaped bottom wall portion 33, and a back yoke portion 34 having a cylindrical shape. The cylindrical boss portion 32 is fixed to the crankshaft 5 under a state where the one end portion 5a of the crankshaft 5 is received in the cylindrical boss portion 32. The bottom wall portion 33, which is fixed to the cylindrical boss portion 32, has a disk-like shape that extends in a radial direction Y of the crankshaft 5. The back yoke portion 34 has a cylindrical shape that extends in the axial direction X of the crankshaft 5 from an outer circumferential edge of the bottom wall portion 33. The back yoke portion 34 extends toward the crank case 1.

The bottom wall portion 33 and the back yoke portion 34 are integrally formed through, for example, a stamping process performed on a metal plate. In the present invention, however, it is acceptable that the bottom wall portion 33 and the back yoke portion 34 are formed as separate parts. More specifically, in the outer rotor main body part 31, the back yoke portion 34 may be integrally formed with another part of the outer rotor main body part 31, or may be formed as a part separate from another part of the outer rotor main body part 31. In a case where the back yoke portion 34 and another part are formed as separate parts, it suffices that the back yoke portion 34 is made of a ferromagnetic material, and another part may be made of a material different from the ferromagnetic material.

The cylindrical boss portion 32 has a tapered reception hole 32a for receiving the one end portion 5a of the crankshaft 5. The tapered reception hole 32a extends in the axial direction X of the crankshaft 5. The tapered reception hole 32a has a taper angle that corresponds to an outer circumferential surface of the one end portion 5a of the crankshaft 5. When the one end portion 5a of the crankshaft 5 enters the reception hole 32a, the outer circumferential surface of the one end portion 5a comes into contact with an inner circumferential surface of the reception hole 32a, and the crankshaft 5 is fixed to the reception hole 32a. As a result, the position of the boss portion 32 is settled with respect to the axial direction X of the crankshaft 5. In this condition, a nut 35 is screwed onto a male thread portion 5c formed in a distal end portion of the one end portion 5a of the crankshaft 5. In this manner, the cylindrical boss portion 32 is fixed to the crankshaft 5.

The cylindrical boss portion 32 has a large-diameter portion 32b that is provided in a proximal end portion (in Fig. 3, at the right side) of the cylindrical boss portion 32. The cylindrical boss portion 32 has a flange portion 32c that is formed on an outer circumferential surface of the large-diameter portion 32b. The flange portion 32c extends radially outward. The large-diameter portion 32b of the cylindrical boss portion 32 is received in a hole 33a that is formed in a central region of the bottom wall portion 33 of the outer rotor main body part 31. In this condition, the flange portion 32c is in contact with an outer circumferential surface (a right-hand surface in Fig. 3) of the bottom wall portion 33. The flange portion 32c of the cylindrical boss portion 32 and the bottom wall portion 33 of the outer rotor main body part 31 are integrally fixed by rivets 36 at a plurality of locations with respect to a circumferential direction of the outer rotor main body part 31. The rivets 36 penetrate through the flange portion 32c and the bottom wall portion 33.

The plurality of permanent magnet parts 37 are provided on an inner circumferential surface of the back yoke portion 34 of the outer rotor main body part 31. Each of the permanent magnet parts 37 is provided such that the S pole and the N pole are arranged side by side with respect to a radial direction of the starter motor SG.

The plurality of permanent magnet parts 37 are arranged in such a manner that the N pole and the S pole alternately appear with respect to a circumferential direction of the starter motor SG. In this embodiment, the number of magnetic poles of the outer rotor 30 facing the inner stator 40 is twenty-four. The number of magnetic poles of the outer rotor 30 means the number of magnetic poles facing the inner stator 40. The number of magnetic pole faces of the permanent magnet parts 37 that are facing teeth 43 of a stator core ST is equivalent to the number of magnetic poles of the outer rotor 30. A magnetic pole face included in each magnetic pole of the outer rotor 30 corresponds to a magnetic pole face of the permanent magnet part 37 that is facing the inner stator 40. The magnetic pole face of the permanent magnet part 37 is covered with a non-magnetic material (not shown) that is arranged between the permanent magnet part 37 and the inner stator 40. No magnetic material is arranged between the permanent magnet part 37 and the inner stator 40. No particular limitation is put on the non-magnetic material, and examples thereof include a stainless steel material. In this embodiment, the permanent magnet part 37 is a ferrite magnet. In the present invention, conventionally known magnets including a neodymium bonded magnet, a samarium-cobalt magnet, a neodymium magnet, and the like, are adoptable for the permanent magnet part. The shape of the permanent magnet part 37 is not particularly limited. Although the outer rotor 30 may be an interior permanent magnet type (IPM type) one configured such that the permanent magnet parts 37 are embedded in a magnetic material, it is preferable that the outer rotor 30 is a surface permanent magnet type (SPM type) one configured such that the permanent magnet parts 37 are exposed from a magnetic material, as illustrated in this embodiment.

As described above, the outer rotor 30, which is attached to the crankshaft. 5 such that it is rotatable together with the crankshaft 5, is a rotating element for increasing the inertia of the crankshaft 5. A cooling fan F including a plurality of blades Fa is provided to the outer circumferential surface (at the right side in Figs. 2 and 3) of the bottom wall portion 33 of the outer rotor 30. The cooling fan F is fixed to the outer circumferential surface of the bottom wall portion 33 by means of a fixture (plurality of bolts Fb).

The inner stator 40 includes a stator core ST and multi-phase stator windings W. The stator core ST is obtained by, for example, thin silicon steel plates being stacked in the axial direction. The stator core ST has, in its central region, a hole 41 whose inner diameter is larger than the outer diameter of the cylindrical boss portion 32 of the outer rotor 30. The stator core ST includes a plurality of teeth 43 that integrally extend radially outward (see Fig. 4). In this embodiment, eighteen teeth 43 in total are arranged at intervals with respect to the circumferential direction. In other words, the stator core ST has eighteen slots SL in total that are arranged at intervals with respect to the circumferential direction (see Fig. 4). The plurality of teeth 43 are arranged at equal intervals with respect to the circumferential direction.

Each of the stator windings W is wound on each of the teeth 43. That is, the multi-phase stator windings W are arranged through the slots SL. Fig. 4 shows a state where the stator windings W are in the slots SL. Each of the multi-phase stator windings W belongs to any of U-phase, V-phase, and W-phase. The stator windings W are arranged in the order of U-phase, V-phase, and W-phase, for example.

As shown in Fig. 3, the inner stator 40 has the hole 41 formed in a central region of the inner stator 40 with respect to the radial direction of the starter motor SG. The crankshaft 5 and the cylindrical boss portion 32 of the outer rotor 30 are arranged in the hole 41 with a gap between them and a wall surface (of the inner stator 40) defining the hole 41. The inner stator 40 under this condition is attached to the crank case 1 of the four-stroke engine body E. The teeth 43 of the inner stator 40 are arranged such that the end portions (distal surfaces) of the teeth 43 are at an interval from the magnetic pole faces (inner circumferential surfaces) of the permanent magnet parts 37 of the outer rotor 30. In this state, the outer rotor 30 is rotated along with rotation of the crankshaft 5. The outer rotor 30 rotates integrally with the crankshaft 5. In other words, the rotation speed of the outer rotor 30 is equal to the rotation speed of the crankshaft 5.

A further description of the outer rotor 30 will be given with reference to Fig. 4. The permanent magnet parts 37 are provided outside the inner stator 40 with respect to the radial direction of the starter motor SG. The back yoke portion 34 is provided outside the permanent magnet parts 37 with respect to the radial direction. The permanent magnet parts 37 include, in their surfaces facing the inner stator 40, a plurality of magnetic pole faces 37a The magnetic pole faces 37a are arranged in the circumferential direction of the starter motor SG. Each of the magnetic pole faces 37a has N pole or S pole. The N pole and S pole are arranged alternately with respect to the circumferential direction of the starter motor SG. The magnetic pole faces 37a of the permanent magnet parts 37 face the inner stator 40. In this embodiment, a plurality of magnets are arranged in the circumferential direction of the starter motor SG, and each of the plurality of magnets is arranged with its S pole and N pole arranged side by side in the radial direction of the starter motor SG. A single S pole and a single N pole adjacent to each other with respect to the circumferential direction constitute a magnetic pole face pair 37p. The number of the magnetic pole face pairs 37p is one-half of the number of the magnetic pole faces 37a. In this embodiment, the outer rotor 30 is provided with twenty-four magnetic pole faces 37a that are facing the inner stator 40, and the number of the magnetic pole face pairs 37p included in the outer rotor 30 is twelve. Twelve magnetic pole face pairs 37p corresponding to the twelve magnet pairs are shown in Fig. 4. For clarity of the drawing, however, the reference sign 37p is given to only one of the pairs. The number of the magnetic pole faces 37a included in the starter motor SG is more than 2/3 of the number of the teeth 43. The number of the magnetic pole faces 37a included in the starter motor SG is equal or more than 4/3 of the number of the teeth 43.

The outer rotor 30 includes, on its outer surface, a plurality of detection object parts 38 for detection of the rotation position of the outer rotor 30. The plurality of detection object parts 38 are detected with use of magnetic effects. The plurality of detection object parts 38 are provided on the outer surface of the outer rotor 30 at intervals with respect to the circumferential direction. In this embodiment, the plurality of detection object parts 38 are provided on an outer circumferential surface of the outer rotor 30 at intervals with respect to the circumferential direction. The plurality of detection object parts 38 are arranged on an outer circumferential surface of the back yoke portion 34 having a cylindrical shape. Each of the plurality of detection object parts 38 protrudes from the outer circumferential surface of the back yoke portion 34 toward the outside in the radial direction Y of the starter motor SG. The bottom wall portion 33, the back yoke portion 34, and the detection object parts 38 are integrally formed through, for example, a stamping process performed on a metal plate such as an iron plate. That is, the detection object parts 38 are made of a ferromagnetic material. Details of arrangement of the detection object parts 38 will be described later.

A rotor position detection device 50 is a device that detects the position of the outer rotor 30. The rotor position detection device 50 is provided at a position allowed to be facing the plurality of detection object parts 38. To be more specific, the rotor position detection device 50 is arranged at a position that allows the plurality of detection object parts 38 to come into opposition to the rotor position detection device 50 one after another. The rotor position detection device 50 is facing a path through which the detection object parts 38 move along with rotation of the outer rotor 30. The rotor position detection device 50 is arranged at a position distant from the inner stator 40. In this embodiment, the rotor position detection device 50 is arranged such that the back yoke portion 34 and the permanent magnet parts 37 of the outer rotor 30 are located between the rotor position detection device 50 and the inner stator 40 having the stator windings W with respect to the radial direction of the crankshaft 5. The rotor position detection device 50 is arranged outside the outer rotor 30 with respect to the radial direction of the starter motor SG. The rotor position detection device 50 faces the outer circumferential surface of the outer rotor 30.

The rotor position detection device 50 includes a detection-purpose winding 51. The detection-purpose winding 51 is a winding separate from the stator windings W included in the inner stator 40. A current for driving the outer rotor 30 of the starter motor SG by means of an electromagnetic force is supplied to the stator windings W. On the other hand, the current for driving the outer rotor 30 of the starter motor SG is not supplied to the detection-purpose winding 51. In other words, while the stator windings W generate magnetic fluxes that drive the outer rotor 30, the detection-purpose winding 51 does not generate magnetic fluxes that drive the outer rotor 30. Additionally, while a current generated in the stator windings W at a time of power generation is supplied to a battery 14, a current generated in the detection-purpose winding 51 is not supplied to the battery 14. The rotor position detection device 50 includes neither a Hall element nor an MR element. The engine unit EU of this embodiment (see Fig. 1) does not include a Hall element nor an MR element. The rotor position detection device 50 that detects the position of the outer rotor 30 by using the detection-purpose winding 51 does not include a semiconductor element. The rotor position detection device 50 has a higher heat resistance than that of a Hall IC or an MR sensor which uses a semiconductor element to detect the position.

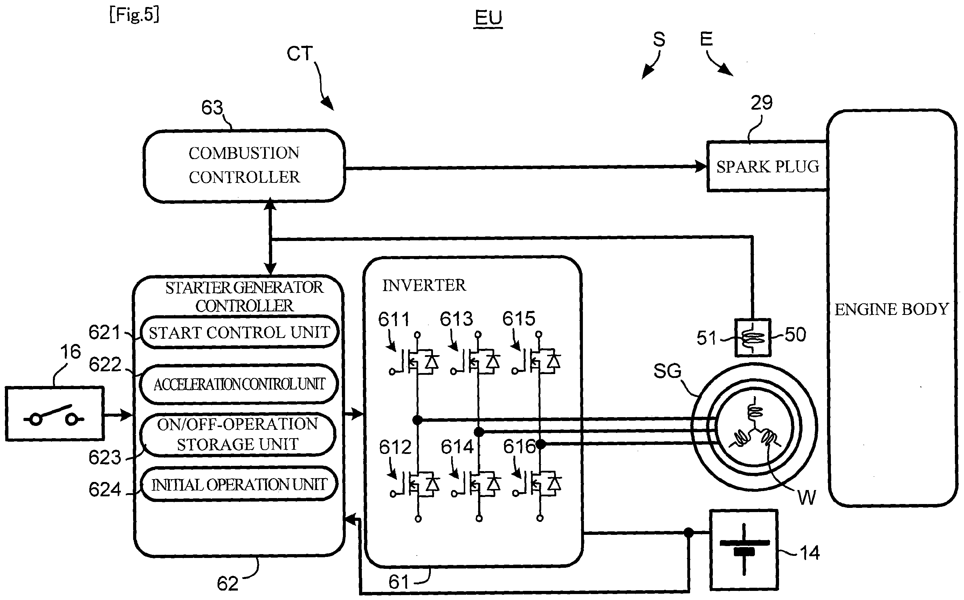

An electrical signal flowing in the detection-purpose winding 51 varies depending on a variation in the magnetic condition caused when the plurality of detection object parts 38 move along with rotation of the crankshaft 5. The rotor position detection device 50 also includes a detection-purpose magnet 52 and a core 53. The core 53 is a rod-like member made of, for example, iron. The detection-purpose winding 51 is wound on the core 53. The detection-purpose magnet 52 is arranged in one end portion of the core 53, and the other end portion of the core 53 faces the outer circumferential surface of the back yoke portion 34 of the outer rotor 30. The detection-purpose winding 51 functions as a pickup coil that detects the detection object parts 38. A voltage caused by an electromotive force generated in the detection-purpose winding 51 varies in accordance with a variation in the fluxes interlinking with the detection-purpose winding 51 caused when the detection object parts 38 provided on the outer circumferential surface of the back yoke portion 34 move close to or away from the core 53 along with rotation of the outer rotor 30. The detection-purpose winding 51 utilizes this mechanism to magnetically detect the detection object parts 38. The detection-purpose winding 51 detects the detection object parts 38 after rotation of the outer rotor 30 is started. That is, the rotor position detection device 50 starts detecting the rotation position of the outer rotor 30 after rotation of the crankshaft 5 is started. While the outer rotor 30 is rotating, the rotor position detection device 50 magnetically detects the detection object parts 38 one after another by means of the detection-purpose winding 51. The detection-purpose winding 51 of the rotor position detection device 50 outputs a detection signal to a control device CT (see Fig. 5). Instead of the above-described configuration in which the voltage caused by the electromotive force varies along with passing of the detection object parts 38, other configurations are also adoptable for the rotor position detection device 50. Examples of such other configurations adoptable for the rotor position detection device 50 include a configuration in which the detection-purpose winding 51 is constantly rendered conducting and a conducting current varies depending on a variation in inductance caused along with passing of the detection object parts 38.

### [Arrangement of Detection object parts and Rotor Position Detection Device]

Referring to Fig. 4, a description will be given of arrangement of the detection object parts 38 of the outer rotor 30. In this embodiment, the plurality of detection object parts 38 are provided on the outer surface of the outer rotor 30. Each the plurality of detection object parts 38 is arranged so as to satisfy substantially the same positional relationship relative to the a corresponding one of magnetic pole face pairs 37p. The rotor position detection device 50 is provided at a position allowed to be opposed to the plurality of detection object parts 38. The rotor position detection device 50 is provided at a position facing each of the plurality of detection object parts 38 during rotation of the outer rotor 30. The rotor position detection device 50 does not faces the plurality of detection object parts 38 at a time (at a given time) but one of the plurality of detection object parts 38. In Fig. 4, the dashed and dotted lines indicate specified positions with respect to the circumferential direction, which are defined in advance. Each of the specified positions is a position in the magnetic pole pair 37p including two magnetic poles (S pole and N pole) adjacent to each other with respect to the circumferential direction. The specified positions are substantially identical in terms of their locations in corresponding ones of the plurality of magnetic pole face pairs 37p. The specified positions represent the same electrical angle phase in corresponding ones of the magnetic pole face pairs 37p. The electrical angle is a rotation angle based on a cycle of repetition of the magnetic pole pair 37p. The entirety of the magnetic pole pair 37p corresponds to 360 degrees in electrical angle. Each of the plurality of detection object parts 38 is arranged at the specified position in each of the magnetic pole face pairs 37p. Since the plurality of detection object parts 38 have substantially the same positional relationship relative to the magnetic pole face pairs 37p, correlating a variation in the electrical signal in the detection-purpose winding 51 with the electrical angle of the starter motor SG is easy. It may be acceptable that the specified positions where the plurality of detection object parts 38 are arranged are different from the ones shown in Fig. 4, that is, the specified positions may be shifted from the positions indicated by the dashed and dotted lines in Fig. 4, as long as the plurality of detection object parts 38 have substantially the same positional relationship relative to the magnetic pole face pairs 37p. As shown in Fig. 4, not all of the plurality of detection object parts 38 are arranged at equal intervals. There are positions (specified positions) located at equal intervals, and a position (missing position) having no detection object part 38 arranged therein.

In this embodiment, the plurality of detection object parts 38 provided on the outer surface of the outer rotor 30 are at angular intervals of [360 degrees / (a positive divisor of the number of magnetic pole face pairs, the positive divisor greater than one)] with respect to the circumferential direction. The 360 degrees indicate mechanical angle. The rotor position detection device 50 is provided at a position facing each of the plurality of detection object parts 38 during rotation of the outer rotor 30. The plurality of detection object parts 38 are provided on the outer surface of the outer rotor 30 at angular intervals of [360 degrees / (a positive divisor of the number of the magnetic pole face pairs, the positive divisor greater than one)] with respect to the circumferential direction. In the example shown in Fig. 4, the number equal to the number of magnetic pole face pairs is selected as the positive divisor of the number of magnetic pole face pairs, that is greater than one. Thus, the plurality of detection object parts 38 provided on the outer surface of the outer rotor 30 are at angular intervals of [360 degrees / (the number of magnetic pole face pairs)] with respect to the circumferential direction. In the example shown in Fig. 4, the number of magnetic pole face pairs is twelve, and therefore the plurality of detection object parts 38 provided on the outer surface of the outer rotor 30 are at angular intervals of [360 degrees / 12], that is, 30 degrees. The specified positions indicated by the dashed and dotted lines in Fig. 4 represent angular intervals of 30 degrees. Since the plurality of detection object parts 38 are provided at angular intervals of [360 degrees / (a positive divisor of the number of the magnetic pole face pairs, the positive divisor greater than one)] with respect to the circumferential direction, correlating a variation in the electrical signal in the detection-purpose winding 51 with the electrical angle of the starter motor SG is easy.

In this embodiment, the outer rotor 30 is provided with eleven detection object parts 38, the number of which is one less than the number of the specified positions. The eleven detection object parts 38 are arranged at eleven of the twelve specified positions, respectively. That is, the plurality of detection object parts 38 provided on the outer surface of the outer rotor 30 are arranged at positions that are spaced by a plurality of substantially equal intervals and one different interval from the plurality of substantially equal intervals. The one interval different from the plurality of substantially equal intervals is wider than each of the plurality of intervals. The rotor position detection device 50 is provided at a position facing each of the plurality of detection object parts 38 during rotation of the outer rotor 30. The plurality of detection object parts 38 are spaced by the plurality of equal intervals and the one different interval. In the example shown in Fig. 4, the eleven detection object parts 38 are arranged at positions that are spaced by a plurality of intervals of 30 degrees and one interval of 60 degrees which is different from the plurality of intervals of 30 degrees. That is, the plurality of (twelve) specified positions on the outer surface of the outer rotor 30 are at equal intervals or at substantially equal intervals with respect to the circumferential direction of the crankshaft 5. The angular interval between two detection object parts 38 that are arranged at, among the plurality of specified positions, the two specified positions each adjacent to the position (missing position) having no detection object part 38 arranged therein with respect to the circumferential direction is twice the angular interval between any of the other detection object parts 38. In this manner, one of the plurality of intervals of the plurality of detection object parts 38 is different from the others. This configuration enables detection of a reference position in one rotation of the crankshaft 5.

### [Electrical Configuration]

Fig. 5 is a block diagram showing a basic electrical configuration of the engine unit EU shown in Fig. 1.

The engine unit EU includes the four-stroke engine body E, the starter motor SG, and the control device CT. The starter motor SG, a spark plug 29, and a battery 14 are connected to the control device CT.

The combination of the control device CT, the rotor position detection device 50 and the plurality of detection object parts 38 corresponds to an example of the control device in the present invention.

The control device CT is connected to the multi-phase stator windings W, and supplies a current from the battery 14 provided in a vehicle to the multi-phase stator windings W. The control device CT includes a starter generator controller 62, a combustion controller 63, and a plurality of switching parts 611 to 616. In this embodiment, the control device CT includes six switching parts 611 to 616. The switching parts 611 to 616 constitute a three-phase bridge inverter. The plurality of switching parts 611 to 616, each of which is connected to each phase of the multi-phase stator windings W, selectively allow or block the passing of a current between the stator windings W and the battery 14. More specifically, when the starter motor SG functions as a starter motor, switching between causing conduction of the multi-phase stator windings W and stopping the conduction is implemented by on/off-operation of the switching parts 611 to 616. When the starter motor SG functions as a generator, switching between allowing and blocking the passing of a current between each of the stator windings W and the battery 14 is implemented by on/off-operation of each of the switching parts 611 to 616. Switching on/off of the switching parts 611 to 616 one after another allows rectification of a three-phase AC outputted from the starter motor SG and a voltage control.

Each of the switching parts 611 to 616 includes a switching element. The switching element is, for example, a transistor and in more detail, a FET (Field Effect Transistor). Instead of FETs, for example, thyristors and IGBTs (Insulated Gate Bipolar Transistors) are also adoptable for the switching parts 611 to 616.

The starter generator controller 62 controls on/off-operation of each of the switching parts 611 to 616, to control the operation of the starter motor SG. The starter generator controller 62 includes a start control unit 621, an acceleration control unit 622, an on/off-operation storage unit 623, and an initial operation unit 624. The combustion controller 63 and the starter generator controller 62 including the start control unit 621 and the acceleration control unit 622 are implemented in computer (not shown) and control software executed in the computer. Here, it may be also acceptable that the combustion controller 63 and the starter generator controller 62 including the start control unit 621 and the acceleration control unit 622 are partially or entirely implemented in a wired logic that is an electronic circuit. Additionally, for example, the starter generator controller 62 and the combustion controller 63 may be configured as separate devices and arranged at a distance from each other, or alternatively they may be configured as an integrated device.

The on/off-operation storage unit 623 is formed of a memory, for example. The on/off-operation storage unit 623 stores data relating to on/off-operation of the plurality of switching parts 611 to 616. More specifically, the on/off-operation storage unit 623 stores software describing an information map, and information used for the control device CT to control the starter motor SG and the four-stroke engine body E. The initial operation unit 624 is formed of an electronic circuit. The initial operation unit 624 generates an electrical signal for performing on/off-operation of the plurality of switching parts 611 to 616 when the crankshaft 5 is stopped. The control device CT may concurrently operate both the on/off-operation storage unit 623 and the initial operation unit 624, or may operate one of the on/off-operation storage unit 623 and the initial operation unit 624.

The combustion controller 63 causes the spark plug 29 to perform an ignition operation, thus controlling a combustion operation of the four-stroke engine body E. In a case where the four-stroke engine body E includes a fuel injector that injects a fuel for generation of a mixed gas, the combustion controller 63 also controls injection of the fuel injector and thus controls the combustion operation of the four-stroke engine body E.

A starter switch 16 for starting the four-stroke engine body E is connected to the starter generator controller 62. The starter switch 16 is operated by a rider to start of the four-stroke engine body E. The starter generator controller 62 of the control device CT detects a voltage of the battery 14, and thus detects the state of charge of the battery 14. For the detection of the state of charge of the battery 14, not only detection of the voltage of the battery 14 but also, for example, detection of a current flowing in the battery 14 in a charged state is adoptable.

The control device CT controls the starter motor SG via operations of an inverter 61, the starter generator controller 62, and the combustion controller 63.

### [Operation of Starting Engine Unit]

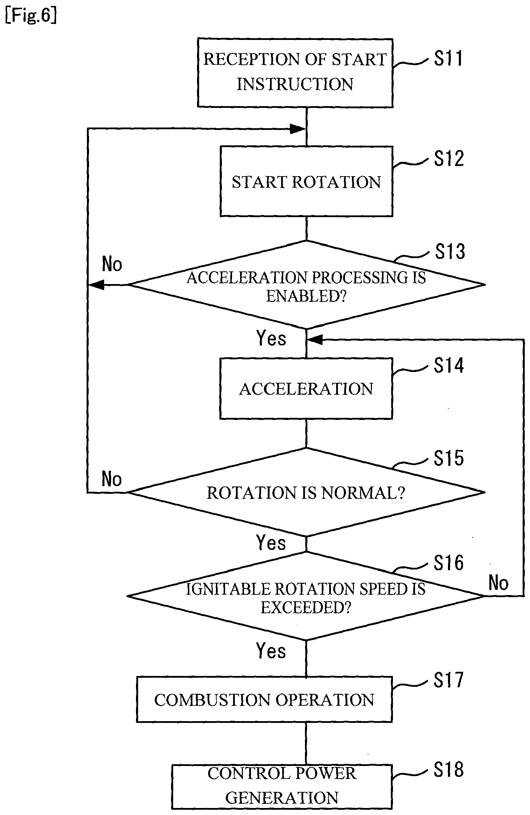

Fig. 6 is a flowchart illustrating an operation of the engine unit EU shown in Fig. 5.

In response to reception of a start instruction (S11), the control device CT causes the starter motor SG to rotate the crankshaft 5 in the forward direction, to start the four-stroke engine body E (S12 to S15). In starting the four-stroke engine body E, the control device CT shifts from a control mode (S12) for starting forward rotation of the crankshaft 5 to a control mode (S14) for accelerating the forward rotation of the crankshaft 5. More specifically, the start control unit 621 (Fig. 5) executes rotation start processing (S12), and then the acceleration control unit 622 executes acceleration processing (S14).

If the rotation speed of the crankshaft 5 is higher than a predetermined ignitable rotation speed, the control device CT starts the combustion operation of the four-stroke engine body E (S17).

Upon the four-stroke engine body E starting combustion (S17), the starter motor SG is driven by the four-stroke engine body E, to function as a generator. That is, after the control device CT shifts from the control mode (S12) for starting rotation of the crankshaft 5 to the control mode (S14) for accelerating the rotation of the crankshaft 5 and then the four-stroke engine body E starts combustion, the control device CT performs on/off-operation of the plurality of switching parts 611 to 616 based on an electrical signal in the detection-purpose winding 51 of the rotor position detection device 50. The electrical signal varies depending on a variation in the magnetic condition caused by rotational movement of the plurality of detection object parts 38 provided on the outer rotor 30. In this manner, the control device CT controls a current supplied from the plurality of stator windings W to the battery 14.

The starter motor SG for starting the four-stroke engine body E serves also as a generator after the combustion of the four-stroke engine body E is started. This configuration can downsize the engine unit EU as compared with, for example, a configuration including a generator for single purpose. As a result, the vehicle mountability is improved. The starter motor SG serving also as a generator requires an enhanced torque to be outputted at a time of start of the engine body, which involves a situation where undesirably high power is generated by the multi-phase stator windings. In this respect, the detection-purpose winding, which is originally for use at a time of start, and the plurality of switching parts are utilized to achieve an efficient control of the current supplied from the plurality of stator windings W to the battery 134.

The start of the four-stroke engine body E will be described.

The control device CT shifts from the control mode (S12) for causing the stopped crankshaft 5 to start forward rotation to the control mode (S14) for accelerating the forward rotation of the crankshaft 5.

In the control mode (S12) for starting forward rotation of the crankshaft 5, the control device CT performs on/off-operation of the plurality of switching parts 611 to 616 at predefined timings in a state where the crankshaft 5 is stopped. Thus, the control device CT supplies a current to the multi-phase stator windings W, to start forward rotation of the crankshaft 5. More specifically, in the state where the crankshaft 5 is stopped, the start control unit 621 performs on/off-operation of the plurality of switching parts 611 to 616 at predefined timings. Thus, the start control unit 621 supplies a current to the multi-phase stator windings W, to start forward rotation of the crankshaft 5.

In the control mode (S12) for starting forward rotation of the crankshaft 5, the control device CT performs an open-loop control for on/off-operation of the switching parts 611 to 616. That is, the control device CT causes conduction of the multi-phase stator windings W one after another at predefined timings without performing a feedback control based on the position of the outer rotor 30.

By performing on/off-operation of the switching parts 611 to 616 at predefined timings, the control device CT performs on/off-operation of the switching parts 611 to 616 without using information about the position of the outer rotor 30.

For example, by performing on/off-operation of the switching parts 611 to 616 at predefined timings, the control device CT performs on/off-operation of the switching parts 611 to 616 without being based on the signal outputted from the rotor position detection device 50. By performing on/off-operation of the switching parts 611 to 616 at predefined timings, the control device CT performs on/off-operation of the switching parts 611 to 616 without using any magnetic sensor with built-in semiconductor element.

The timing of on/off-operation of the switching parts 611 to 616 is determined irrespective of information about the position of the outer rotor 30.

In step S12 of Fig. 6, the control device CT performs on/off-operation of the plurality of switching parts 611 to 616 at predefined timings that are based on the data stored in the on/off-operation storage unit 623, to supply a current in the multi-phase stator windings W, so that forward rotation of the crankshaft 5 is started.

The on/off-operation storage unit 623 stores data related to on/off-operation of the switching parts 611 to 616. For example, the on/off-operation storage unit 623 stores a map (setting table) indicating the correspondence between the state and the order of the switching parts 611 to 616. Alternatively, the on/off-operation storage unit 623 may store a map indicating the correspondence between the state of the switching parts 611 to 616 and a time. The control device CT reads out data from the on/off-operation storage unit 623, and accordingly performs on/off operation of the switching parts 611 to 616 at predefined timings. The cycle in which the timing for performing the on/off operation of the switching parts 611 to 616 comes becomes shorter over time.

Instead of the state of the switching parts 611 to 616, the cycle (frequency) in which the state of the switching parts 611 to 616 changes and the amount of the change may be stored in the on/off-operation storage unit 623. In this case, the control device CT reads out the cycle and the amount of change of the cycle from the on/off-operation storage unit 623, and accordingly performs on/off operation of the switching parts 611 to 616 at predefined timings.

Alternatively, the control device CT may perform on/off-operation of the plurality of switching parts 611 to 616 at predefined timings without reading data from the on/off-operation storage unit 623. For example, information about the state of the plurality of switching parts and a time may be incorporated in a program of the control device CT. Further alternatively, the control device may perform on/off-operation of the plurality of switching parts at predefined timings by computing a mathematical formula representing a timing. Still further alternatively, the control device may perform on/off-operation of the plurality of switching parts at predefined timings by using an electronic circuit (wired logic). The initial operation unit 624 is an electronic circuit that generates a signal indicating the timing for performing on/off-operation of the plurality of switching parts 611 to 616. A timing at which the initial operation unit 624 outputs the signal comes in a cycle that becomes shorter over time. The initial operation unit 624 may output a signal for causing on/off-operation of the plurality of switching parts 611 to 616. That is, the control device CT may perform on/off-operation of the plurality of switching parts 611 to 616 at predefined timings based on the signal outputted from the initial operation unit 624.

In the state where the crankshaft 5 is stopped, on/off-operation of the plurality of switching parts 611 to 616 at predetermined timings is performed based on the data stored in the on/off-operation storage unit 623, to supply a current to the multi-phase stator windings W, so that forward rotation of the crankshaft 5 is started. Thus, the forward rotation of the crankshaft 5 can be started even in the state where the crankshaft 5 is stopped.

The control device CT switches on/off of the switching parts 611 to 616 one after another in a pattern that causes forward rotation of the outer rotor 30. The pattern is, for example, a pattern in which paths of the current flowing in the stator windings W each corresponding to each of U-phase, V-phase, and W-phase are switched one after another. In the stator winding W of each phase, for example, causing conduction for a time period corresponding to 120 degrees in electrical angle and suspending conduction for a time period corresponding to 60 degrees in electrical angle are repeated. The current supply to the multi-phase stator windings W causes the outer rotor 30 and the crankshaft 5 to start forward rotation.

In the control mode (S12) for starting rotation of the crankshaft 5, the control device CT is able to start forward rotation of the crankshaft 5 via the initial operation unit 624 in accordance with setting. More specifically, the control device CT performs on/off-operation of the plurality of switching parts 611 to 616 at predetermined timings based on an electrical signal generated by the initial operation unit 624 in the state where the crankshaft 5 is stopped, and to supply a current to the multi-phase stator windings W, so that forward rotation of the crankshaft 5 is started.

Performing on/off-operations based on the electrical signal generated by the initial operation unit 624 enables forward rotation of the crankshaft 5 to be started even in the state where the electrical signal in the detection-purpose winding 51 does not vary, that is, in the state where the crankshaft 5 is stopped.

Preferably, the control device CT performs on/off-operation of the plurality of switching parts 611 to 616, and rotates the crankshaft 5 in the forward direction while shortening the time interval of the current supply to the multi-phase stator windings W.

Since the control device CT rotates the crankshaft 5 in the forward direction while shortening the time interval of the current supply to the multi-phase stator windings W, the rotation speed of the crankshaft 5 can be gradually increased.

In a state where the crankshaft 5 and the outer rotor 30 are stopped, the electrical signal flowing in the detection-purpose winding 51 of the rotor position detection device 50 does not vary. In other words, in a state where the crankshaft 5 and the outer rotor 30 are stopped, the rotor position detection device 50 outputs no signal.

Movement of the plurality of detection object parts 38 along with rotation of the crankshaft 5 and the outer rotor 30 causes a variation in the electrical signal flowing in the detection-purpose winding 51 of the rotor position detection device 50.

The control device CT shifts from the control mode (S12) for starting forward rotation of the crankshaft 5 to the control mode (S14) for accelerating the forward rotation of the crankshaft 5. At this time, the control device CT shifts from the control mode (S12) for starting forward rotation of the crankshaft 5 to the control mode (S14) for accelerating the forward rotation of the crankshaft 5 based on the electrical signal in the detection-purpose winding 51 of the rotor position detection device 50, the electrical signal varying depending on a variation in the magnetic condition caused by rotational movement of the plurality of detection object parts 38 (S13). In the control mode (S14) for accelerating the forward rotation, the control device CT accelerates the forward rotation of the crankshaft 5 which has started in the control mode (S12) for starting forward rotation of the crankshaft 5.

In the control mode (S14) for accelerating the forward rotation of the crankshaft 5, the control device CT performs on/off-operation of the plurality of switching parts 611 to 616 at timings that are based on the electrical signal flowing in the detection-purpose winding 51 of the rotor position detection device 50. To be exact, the acceleration control unit 622 performs on/off-operation of the plurality of switching parts 611 to 616 at timings that are based on the electrical signal flowing in the detection-purpose winding 51 of the rotor position detection device 50. The electrical signal flowing in the detection-purpose winding 51 is a signal that varies depending on a variation in the magnetic condition caused by movement of the plurality of detection object parts 38 along with the forward rotation of the crankshaft 5. Based on this, the control device CT supplies a current to the multi-phase stator windings W, to accelerate the forward rotation of the crankshaft 5. Since one (60 degrees) of the plurality of intervals of the plurality of detection object parts 38 is different from the other intervals (30 degrees), the control device CT is able to detect the reference position in one rotation of the crankshaft 5 based on the electrical signal in the detection-purpose winding 51.

Preferably, in the control mode (S14) for accelerating the forward rotation of the crankshaft 5, the control device CT performs on/off-operation of the plurality of switching parts 611 to 616 at timings corresponding to 120-degree conduction. To be specific, the control device CT performs on/off-operation of the plurality of switching parts 611 to 616 at timings corresponding to the 120-degree conduction based on the electrical signal flowing in the detection-purpose winding 51 of the rotor position detection device 50, the electrical signal varying depending on a variation in the magnetic condition caused by movement of the plurality of detection object parts 38 along with the forward rotation of the crankshaft 5. The control device CT accelerates the forward rotation of the crankshaft 5 by supplying a current to the multi-phase stator windings W while repeating supply and non-supply of the current to each phase of the multi-phase stator windings W, the supply and non-supply of the current to one phase being phase-shifted from the supply and non-supply of the current to another phase. For the 120-degree conduction, a conduction suspension time period is provided in each phase of the multi-phase stator windings W so that conduction occurs intermittently at a conduction angle of less than 180 degrees. The conduction suspension time period occurs in one phase of the multi-phase stator windings W after another. The control device CT controls two conditions, namely, supplying a current (conduction) and not supplying a current (non-conduction). This configuration enables the control to be performed through a simple process as compared with, for example, a configuration that dynamically changes a current during a supply time period. Accordingly, the forward rotation of the crankshaft 5 can be accelerated by the control device having a simple configuration.

It is also preferable that the control device CT accelerates the forward rotation of the crankshaft 5 by performing on/off-operation of the plurality of switching parts 611 to 616 at timings corresponding by vector control method instead of the 120-degree conduction. In this case, the control device CT performs on/off-operation of the plurality of switching parts 611 to 616 at timings corresponding by vector control method based on the electrical signal flowing in the detection-purpose winding 51 of the rotor position detection device 50, the electrical signal varying depending on a variation in the magnetic condition caused by movement of the plurality of detection object parts 38 along with the forward rotation of the crankshaft 5. In this manner, the control device CT supplies a current to each of the multi-phase stator windings W, to accelerate the forward rotation of the crankshaft 5. In the vector control method, each phase of the multi-phase stator windings W is rendered conducting without a conduction suspension time period. The vector control method is a 180-degree conduction method. In the vector control method, conduction is caused such that a sinusoidal current flows in each phase of the multi-phase stator windings W. Performing on/off-operation of the plurality of switching parts 611 to 616 by vector control method causes a sinusoidal current to be supplied to each of the multi-phase stator windings W. The supply of the sinusoidal current to each of the multi-phase stator windings W reduces a torque variation, which leads to improvement in the power efficiency and the output torque of the starter motor SG. The starter motor SG is supplied with power from the battery 14 provided in the vehicle. The improvement in the power efficiency of the starter motor SG achieves suppression of consumption of power stored the battery 14.

In the rotor position detection device 50 of this embodiment, the detection-purpose winding 51, is provided separately from the stator windings W, and therefore not under the structural restriction involved in the need to ensure performance of the starter motor. Accordingly, devising the structure of the detection-purpose winding 51 leads to achievement of a configuration that enables the electrical signal to flow in the detection-purpose winding 51 even when the rotation speed is extremely low immediately after the rotation is started.

For example, in a case where the starter motor SG functions as a starter motor, the number of turns of the stator winding W is restricted because of the need to suppress a torque decrease that is caused by an increase in the induced voltage, and in other words, because of the need to ensure the capability of quick start of the engine, and the like. The restriction of the number of turns of the stator winding W is also imposed in terms of suppression of generation of an excessive induced voltage in a case where the starter motor SG functions as a generator. On the other hand, the detection-purpose winding 51 makes no direct contribution to generation of a torque in the starter motor or to generation of a power generation voltage in the generator. In the detection-purpose winding 51, unlike in the stator winding W, a current for torque output or for power generation does not flow. Unlike the stator winding W, the detection-purpose winding 51 is not under the structural restriction involved in the need to ensure performance of the starter motor SG. Therefore, the number of turns of the detection-purpose winding 51 can be larger than the number of turns of the stator winding W. In one example, the number of turns of the detection-purpose winding 51 is larger than the number of turns of the stator winding W. In another example, the number of turns of the detection-purpose winding 51 is larger than ten times the number of turns of the stator winding W. This enables the electrical signal to flow in the detection-purpose winding 51 even when the rotation speed is extremely low immediately after the rotation is started.

Since the plurality of detection object parts 38 are provided on the outer surface of the outer rotor 30, a large movement of the detection object parts 38 is obtained even when the rotation speed of the crankshaft 5 is extremely low immediately after the rotation is started. This enables the electrical signal to flow in the detection-purpose winding 51 even when the rotation speed is extremely low immediately after the rotation is started.

In the state where the crankshaft 5 is stopped, the control device CT performs on/off-operation of the plurality of switching parts 611 to 616 at the predefined timings, to supply a current to the multi-phase stator windings W, so that forward rotation of the crankshaft 5 is started. Then, the control device CT supplies a current to the multi-phase stator windings W based on the electrical signal in the detection-purpose winding 51, the electrical signal varying along with forward rotation of the crankshaft 5. Thus, the control device CT accelerates the forward rotation of the crankshaft 5 of the four-stroke engine body E having a load variation. Once the crankshaft 5 starts forward rotation, detection of the position of the outer rotor 30 is enabled even when the rotation speed is low, and moreover the control mode is shifted to the control mode for accelerating the forward rotation of the crankshaft 5. Accordingly, the engine unit EU of this embodiment is able to ensure the capability of quick start, the capability being comparable to that of an engine unit including a Hall IC, for example.

In a period from the start of forward rotation of the crankshaft 5 to start of combustion of the four-stroke engine body E, the control device CT shifts to a control mode of accelerating the forward rotation of the crankshaft 5 of the four-stroke engine body E by performing on/off-operation of the plurality of switching parts 611 to 616 to supply a current to the multi-phase stator windings W based on an electrical signal in the detection-purpose winding 51 of the rotor position detection device 50.

The control device CT of this embodiment starts forward rotation of the crankshaft without using any magnetic sensor with built-in semiconductor element. The control device CT of this embodiment shifts from the control mode for starting forward rotation of the crankshaft to the control mode for accelerating the forward rotation of the crankshaft, without using any magnetic sensor with built-in semiconductor element.

This embodiment adopts the rotor position detection device 50 including the detection-purpose winding 51 that is provided separately from the stator windings W. This provides a better heat resistance than, for example, a Hall IC. In this embodiment, moreover, the plurality of detection object parts 38 are provided on the outer surface of the outer rotor 30, and the rotor position detection device 50 including the detection-purpose winding 51 that is provided separately from the stator windings W is arranged at a position facing each of the detection object parts 38 during rotation of the outer rotor 30. This increases the degree of design freedom of a place where the rotor position detection device 50 is installed. For example, the rotor position detection device 50 can be arranged in a place having a lower temperature than the place between the engine case 1 and the outer rotor 30. Accordingly, a structure for cooling the rotor position detection device 50 including the detection-purpose winding 51 can be simplified. This leads to downsizing of the engine unit EU.

In this embodiment, the capability of quick start and the vehicle mountability of the four-stroke engine body E having a load variation can be improved irrespective of the manner of cooling the four-stroke engine body E.

In this embodiment, shifting of the control mode from the control mode (S12) for starting forward rotation of the crankshaft 5 to the control mode (S14) for accelerating the forward rotation of the crankshaft 5 is based on the electrical signal in the detection-purpose winding 51 of the rotor position detection device 50, the electrical signal varying depending on a variation in the magnetic condition caused by rotational movement of the plurality of detection object parts 38. Therefore, once the crankshaft 5 starts forward rotation, the control mode is shifted based on the varying electrical signal in the detection-purpose winding 51, even when the rotation speed is low. This makes it possible that shifting to the control mode for accelerating the forward rotation of the crankshaft 5 is made at an earlier stage. Accordingly, irrespective of the manner of cooling the four-stroke engine body E, further improvement in the capability of quick start of the four-stroke engine body E having a load variation is obtained with improvement in the vehicle mountability.

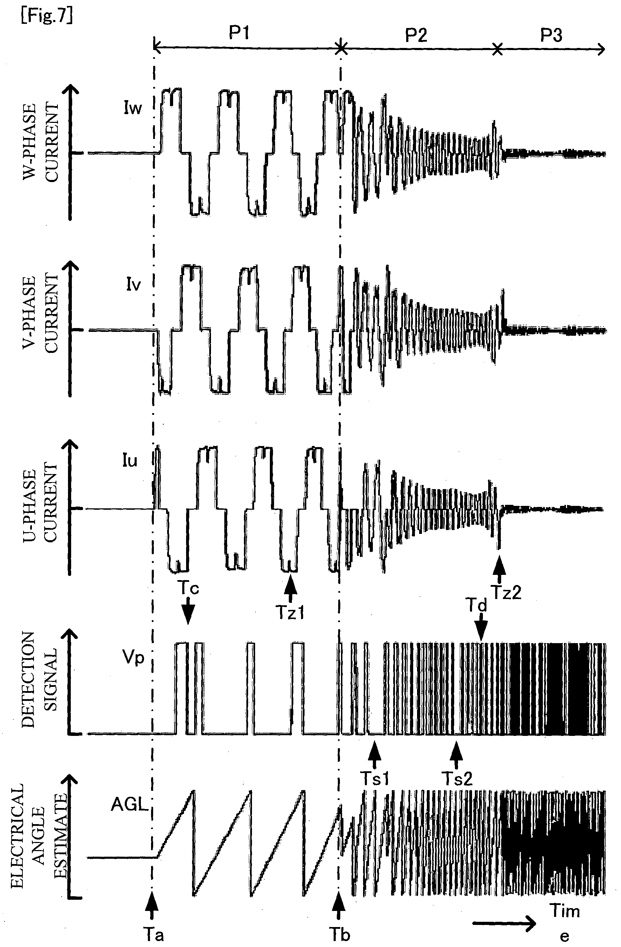

Fig. 7 is a timing chart showing exemplary current and voltage at a time of start of the four-stroke engine body E.

Fig. 7 shows a current Iw flowing in the W-phase stator winding W, a current Iv flowing in the V-phase stator winding W, and a current Iu flowing in the U-phase stator winding W. Fig. 7 shows a detection signal Vp and an electrical angle estimate AGL represented as a voltage level. The detection signal Vp indicates that the detection object parts 38 of the outer rotor 30 are detected by the rotor position detection device 50. The electrical angle estimate AGL is an estimated electrical angle of the control device CT. These waveforms are graphed on the common time axis (horizontal axis). In Fig. 7, P1 represents a time period of a rotation-start control mode, and P2 represents a time period of an acceleration control mode. P3 represents a time period after the combustion operation of the four-stroke engine body E is started. The electrical angle estimate AGL indicates the position of the outer rotor 30 calculated by the control device CT. The electrical angle estimate AGL is an internal variable measured and held by the starter generator controller 62 of the control device CT.

At time Ta, the control device CT starts rotation of the crankshaft 5 (S12 in Fig. 6). The control device CT measures the electrical angle estimate over time, and when the electrical angle estimate reaches a predetermined value, switches the state of conduction in accordance with a predefined pattern. Consequently, on/off-operation of the plurality of switching parts 611 to 616 is performed at predefined timings, to supply a current to the multi-phase stator windings W. As can be seen from cycles of the currents Iw, Iv, Iu shown in Fig. 7, the cycle length in which the starter generator controller 62 renders the stator windings W conducting one after another in the rotation-start control (P1) is longer than the cycle length in which the starter generator controller 62 renders the windings conducting one after another in the acceleration control (P2) that is performed subsequently. This allows the outer rotor 30 to readily start rotation following the conduction. In the rotation-start control (P1), the starter generator controller 62 performs such a control that the multi-phase stator windings W are rendered conducting one after another at timings with gradually decreasing intervals.

After the outer rotor 30 starts rotation, the detection-purpose winding 51 of the rotor position detection device 50 detects the detection object parts 38. The detection signal Vp is outputted in accordance with the detection of the detection object parts 38. The control device CT shifts from the control mode for starting rotation of the crankshaft 5 to the control mode for accelerating the rotation of the crankshaft 5, based on the electrical signal in the detection-purpose winding 51 of the rotor position detection device 50, the electrical signal varying depending on a variation in the magnetic condition caused by movement of the plurality of detection object parts 38. For example, the control device CT determines whether or not the interval of the detection signals of the detection-purpose winding 51, which varies depending on a variation in the magnetic condition caused by movement of the plurality of detection object parts 38, is equivalent to the interval of timings at which the multi-phase stator windings W are rendered conducting one after another. Here, "being equivalent" includes a margin for error in consideration of a deviation of the rotation speed of the outer rotor 30. For the determination of whether or not the control mode for accelerating the rotation of the crankshaft 5 is allowed, a method including determination of whether or not the rotation speed of the outer rotor 30 is higher than a predetermined reference value is adoptable as well as the above-described method including comparison between the intervals of the timings. The rotation speed of the outer rotor 30 can be calculated based on the intervals of timings at which the detection object parts 38 are detected by the detection-purpose winding 51.

At time Tb, the control device CT shifts to the control mode for accelerating the forward rotation of the crankshaft 5 (P2). The control device CT performs on/off-operation of the plurality of switching parts 611 to 616 at timings based on the electrical signal flowing in the detection-purpose winding 51 of the rotor position detection device 50, the electrical signal varying depending on a variation in the magnetic condition caused by movement of the plurality of detection object parts 38 along with the forward rotation of the crankshaft 5.

In the control mode for accelerating the forward rotation of the crankshaft 5 (P2), the control device CT resets the electrical angle estimate AGL to a predetermined value at a timing when, for example, the detection object part 38 is detected by the rotor position detection device 50. Moreover, the control device CT adjusts the speed of counting the electrical angle estimate AGL in accordance with the interval of detections of the detection object parts 38. The control device CT performs on/off-operation of the switching parts 611 to 616 in accordance with the value of the electrical angle estimate AGL, to render the multi-phase stator windings W conducting one after another. Thus, in the acceleration control time period P2 which comes before engine ignition, the multi-phase stator windings W are rendered conducting one after another for rotating the crankshaft 5 of the four-stroke engine body E, based on time intervals at which the detection-purpose winding 51 of the rotor position detection device 50 detects the plurality of detection object parts 38 one after another.

In the control mode for accelerating the forward rotation of the crankshaft 5 (P2), the multi-phase stator windings W are rendered conducting one after another at timings in accordance with the rotation position of the outer rotor 30. This control mode provides an increased rotational torque as compared with the rotation-start control mode. Accordingly, the forward rotation of the crankshaft 5 is accelerated.

As shown in Fig. 4, the plurality of detection object parts 38 of this embodiment are provided on the outer surface of the outer rotor 30, and arranged so as to satisfy the same positional relationship relative to the magnetic pole face pairs 37p. Since the plurality of detection object parts 38 have the same positional relationship relative to the magnetic pole face pairs 37p, correlating a variation in the electrical signal in the detection-purpose winding 51 with the electrical angle of the starter motor SG is easy. More specifically, the variation in the electrical signal in the detection-purpose winding 51 always represents particular position of the outer rotor 30 in the electrical angle. Once the variation in the electrical signal in the detection-purpose winding 51 occurs, the control device CT can determine the position of the outer rotor 30 without detecting of the reference position in one rotation of the crankshaft 5. This enables the control device CT to render multi-phase stator windings W conducting accordance with the rotation position of the outer rotor 30. Accordingly, further improvement in the capability of quick start of the four-stroke engine body E having a load variation is obtained. The control device CT shifts from the control mode for starting forward rotation of the crankshaft 5 to the control mode for accelerating the forward rotation of the crankshaft 5 before starting of the combustion operation of the four-stroke engine body E.

The plurality of detection object parts 38 are provided at angular intervals of [360 degrees / (a positive divisor of the number of the magnetic pole face pairs, the positive divisor greater than one)] with respect to the circumferential direction. Therefore, correlating a variation in the electrical signal in the detection-purpose winding 51 with the electrical angle of the starter motor SG is easy. Accordingly, irrespective of the manner of cooling the engine, further improvement in the capability of quick start of the four-stroke engine body E having a load variation is obtained with improvement in the vehicle mountability.

The starter generator controller 62 performs the above-described acceleration control in step S14, and then in step S15, determines whether or not the outer rotor 30 is rotating, that is, whether or not stopping or loss of synchronism of the outer rotor 30 is occurring.

If the outer rotor 30 is rotating in the forward direction normally (S15 in Fig. 6) and the ignitable rotation speed is exceeded (S16), the combustion controller 63 of the control device CT controls the spark plug 29, thus starting the combustion operation of the four-stroke engine body E. In the example shown in Fig. 7, the combustion operation of the four-stroke engine body E is started at time Tz₂.

After shifting from the control mode for starting forward rotation of the crankshaft 5 to the control mode for accelerating the forward rotation of the crankshaft 5, the control device CT controls the combustion controller 63 based on the electrical signal in the detection-purpose winding 51 of the rotor position detection device 50, the electrical signal varying depending on a variation in the magnetic condition caused by movement of the plurality of detection object parts 38 provided on the outer rotor 30. In more detail, the combustion controller 63 detects the rotation position of the outer rotor 30 based on the electrical signal from the detection-purpose winding 51. In the exemplary detection signal Vp shown in Fig. 7, among the twelve specified positions shown in Fig. 4, one position (missing position) in which no detection object part 38 is arranged passes at timings of Ts1 and Ts2. Among the plurality of intervals of the plurality of detection object parts 38, one interval is different from the other intervals. This enables the control device CT to detect the reference position in one rotation of the crankshaft 5. If, based on the missing position serving as a reference for the rotation position, the combustion controller 63 determines that the outer rotor 30 and the crankshaft 5 are in a target ignition position that is located near the compression top dead center, the combustion controller 63 causes the spark plug 29 to ignite, thus starting the combustion operation of the four-stroke engine body E. In a case where the engine unit EU includes a fuel injector, the combustion controller 63 also controls injection of the fuel injector based on the electrical signal in the detection-purpose winding 51.

The detection object parts 38 and the rotor position detection device 50 are used for detection of an engine control timing, too. This can lead to a further simplified structure of the engine unit EU.

The starting of the combustion operation of the four-stroke engine body E includes an operation of confirming whether the combustion operation is performed normally. Whether the combustion operation is performed normally or not is determined according to whether the rotation speed of the crankshaft 5 exceeds a predetermined value set for the normal combustion operation.

After the combustion operation of the four-stroke engine body E is started (S17 in Fig. 6) and the start of the four-stroke engine body E is completed, the starter motor SG is driven by the four-stroke engine body E, to function as a generator. The control device CT controls power generation (S18 in Fig. 6).

The control device CT of this embodiment is able to accelerate the forward rotation of the crankshaft 5 even after the start of the four-stroke engine body E is completed (S17 of Fig. 6). The control device CT accelerates the forward rotation of the crankshaft 5 by performing on/off-operation of the plurality of switching parts 611 to 616 at timings to supply a current to the multi-phase stator windings W for a predetermined time period, the timings being based on the electrical signal flowing in the detection-purpose winding 51 of the rotor position detection device 50, the electrical signal varying depending on a variation in the magnetic condition caused by movement of the plurality of detection object parts 38 along with the forward rotation of the crankshaft 5. In this manner, the control device CT causes power running of the starter motor SG. The power running of the starter motor SG causes a torque in the forward rotation to be supplied from the starter motor SG to the crankshaft 5. As a result, acceleration of the forward rotation of the crankshaft 5 is enhanced, at least as compared with the forward rotation obtained only by the combustion operation of the four-stroke engine body E.

After the combustion operation of the four-stroke engine body E is started, the stability of rotation of the crankshaft 5 may be sometimes low. After the combustion of the four-stroke engine body is started, the starter motor SG continuously accelerates the forward rotation of the crankshaft 5. Consequently, the forward rotation of the crankshaft 5 caused by the combustion of the four-stroke engine body is stabilized. In this case, a time length sufficient for stabilizing rotation of the crankshaft 5 is set as the predetermined time period. The predetermined time period is, for example, a time period required before the rotation speed of the crankshaft 5 reaches an idling rotation speed.

When, for example, acceleration of the vehicle is demanded after the combustion of the four-stroke engine body E is started, the forward rotation of the crankshaft 5 is accelerated, so that acceleration of the vehicle is assisted. In a case where acceleration is demanded while the starter motor SG is generating power, the control device CT switches the control of the starter motor SG from a power generation control to a power running control, thus accelerating the forward rotation of the crankshaft 5.

As described above, the control device CT accelerates the forward rotation of the crankshaft 5 for a predetermined time period after the start of the four-stroke engine body E is completed. Accordingly, the forward rotation of the crankshaft 5 caused by the combustion operation of the four-stroke engine body E can be stabilized. Moreover, the forward rotation of the crankshaft 5 can be accelerated more quickly. The control device CT performs on/off-operation of the plurality of switching parts 611 to 616 at timings to supply a current to the multi-phase stator windings W, the timings being based on the electrical signal flowing in the detection-purpose winding 51 of the rotor position detection device 50, the electrical signal varying depending on a variation in the magnetic condition caused by movement of the plurality of detection object parts 38 along with the forward rotation of the crankshaft 5. Accordingly, irrespective of the manner of cooling the engine, the forward rotation of the crankshaft 5 is stabilized. Additionally, the acceleration of the forward rotation of the crankshaft 5 is enhanced.

### [Control of Power Generation]

After shifting from the control mode for starting forward rotation of the crankshaft 5 (S12 in Fig. 6) to the control mode for accelerating the forward rotation of the crankshaft 5 (S14 in Fig. 6) and then the combustion of the four-stroke engine body E is started (S17 in Fig. 6), the control device CT controls a current supplied from the plurality of stator windings W to the battery 14. At this time, the control device CT performs on/off-operation of the plurality of switching parts 611 to 616 based on the electrical signal in the detection-purpose winding 51 of the rotor position detection device 50, the electrical signal varying depending on a variation in the magnetic condition caused by movement of the plurality of detection object parts 38 provided on the outer rotor 30.

For example, after the combustion operation of the four-stroke engine body E is started, the control device CT resets the electrical angle estimate AGL (see Fig. 7) to a predetermined value at a timing when the detection object part 38 is detected, in the same manner as before the combustion operation of the four-stroke engine body E is started. Then, the control device CT measures the electrical angle estimate AGL. When the electrical angle estimate AGL reaches a predetermined value, the control device CT switches the on/off pattern of the switching parts 611 to 616, thus controlling the current from the stator windings W. Switching on/off of the switching parts 611 to 616 allows a three-phase AC generated in the multi-phase stator windings W to be rectified and supplied to the battery 14.

In this embodiment, the starter motor SG that starts the four-stroke engine body E is able to serve also as a generator after the combustion of the four-stroke engine body E is started. This configuration can downsize the engine unit EU as compared with, for example, a configuration including a generator for single purpose. As a result, the vehicle mountability is improved. The starter motor SG serving also as a generator requires an enhanced torque to be outputted at a time of start of the four-stroke engine body, which tends to cause a situation where undesirably high power is generated by the multi-phase stator windings W. In this respect, the detection-purpose winding 51, which is originally for use at a time of starting the four-stroke engine body E, and the plurality of switching parts 611 to 616 are utilized to achieve an efficient control of the current supplied from the plurality of stator windings W to the battery 14 compared with a case of using diodes.

In this embodiment, the detection object parts 38 provided on the outer surface of the outer rotor 30 at angular intervals of [360 degrees / (the number of the magnetic pole face pairs 37p; twelve)] with respect to the circumferential direction are illustrated as an example of the plurality of detection object parts provided at angular intervals of [360 degrees / (a positive divisor of the number of magnetic pole face pairs, the positive divisor greater than one)] with respect to the circumferential direction. This, however, does not limit the detection object parts of the present invention. For example, in a case where the number of the magnetic pole face pairs 37p is twelve, the positive divisor of the number of magnetic pole face pairs, that is greater than one, may be any one of two, three, four, and six.

### [Second Embodiment]

Next, a second embodiment of the present invention will be described. In the description of the second embodiment below, the same elements as those of the first embodiment are given the same reference signs, and differences from the above-described first embodiment will be mainly described.

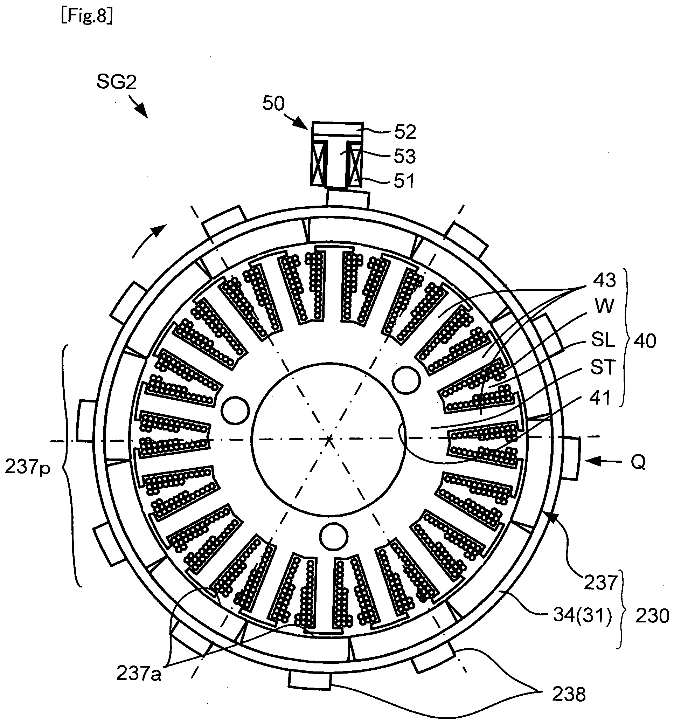

Fig. 8 is a cross-sectional view showing a cross-section of a starter motor SG2 according to a second embodiment of the present invention, as taken along a plane perpendicular to the rotation axis of the starter motor SG2.

In the second embodiment, the number of a plurality of detection object parts 238 included in the starter motor SG2 is larger than the number of magnetic pole face pairs 237p. Each magnetic pole pair 237p is made up of a pair of magnetic pole faces 237a that are adjacent to each other with respect to the circumferential direction. In other words, the number of the magnetic pole face pairs 237p included in the starter motor SG2 is less than the number of the plurality of detection object parts 238. For clarity of the drawing, the reference sign 237p denoting the magnetic pole pair is given to only one of the six magnetic pole face pairs 237p. The exemplary starter motor SG2 shown in Fig. 8 includes six magnetic pole face pairs 237p and eleven detection object parts 238. In this embodiment, the plurality of detection object parts 238 are arranged at positions that are spaced by a plurality of intervals and one different interval, similarly to the first embodiment. The one interval different from the plurality of equal intervals is wider than each of the plurality of intervals. In the example shown in Fig. 8, the eleven detection object parts 238 are arranged at positions that are spaced by a plurality of intervals of 30 degrees and one different interval of 60 degrees. In Fig. 8, the dashed and dotted lines indicate specified positions with respect to the circumferential direction, which are defined in advance. Each of the specified positions is a position in the magnetic pole pair 237p including two magnets (S pole and N pole) adjacent to each other with respect to the circumferential direction.

The starter motor SG2 of this embodiment includes the detection object parts 238, the number of which is greater than the number of the magnetic pole face pairs 237p. Thus, a variation in the electrical signal in the detection-purpose winding 51 is not in one-to-one correspondence with the electrical angle of the starter motor. There are detection object parts 238 arranged at positions indicated by the dashed and dotted lines which represent a specific electrical angle phase, and detection object parts 238 arranged at positions different from the positions indicated by the dashed and dotted lines. Here, one (60 degrees) of the plurality of intervals of the plurality of detection object parts 238 is different from the other intervals (30 degrees). This makes it possible to detect a reference position in one rotation of the crankshaft 5. Accordingly, correlating a variation in the electrical signal in the detection-purpose winding 51 with the electrical angle of the starter motor SG2 is easy based on the electrical signal in the detection-purpose winding 51 which varies depending on a variation in the magnetic condition caused by passing of at least a large interval (60 degrees) and a small interval (30 degrees). For example, in the illustrative case shown in Fig. 8, the electrical angle phase corresponding to the detection object part 238 arranged at a position indicated by the reference sign Q is known from a designed value or a measured value. The electrical angle phase corresponding to the detection object part 238 arranged in the position adjacent to the position indicated by the reference sign Q is also known. The detection object part 238 arranged in the position indicated by the reference sign Q is detected at the interval (60 degrees) that is different from the other intervals (30 degrees) along with rotation of the outer rotor 30. Then, the detection object part 238 arranged in the adjacent position is detected. Therefore, correlating a variation in the electrical signal in the detection-purpose winding 51 with the electrical angle of the starter motor SG2 is easy.

Additionally, since the number of the detection object parts 238 included in the starter motor SG2 is larger than the number of the magnetic pole face pairs 237p, the electrical signal in the detection-purpose winding varies during 360-degrees electrical angle of the starter motor SG2. This enables a more accurate control. Thus, further improvement in the capability of quick start of the four-stroke engine body E having a low-load region can be obtained. Accordingly, irrespective of the manner of cooling the engine, further improvement in the capability of quick start of the engine unit EU having a load variation is obtained with improvement in the vehicle mountability.

### [Third Embodiment]

The above-described embodiments illustrate exemplary configurations in which the plurality of detection object parts are provided on the outer circumferential surface of the outer rotor. Next, a third embodiment will be described in which a plurality of detection object parts are provided in a portion other than the outer circumferential surface of the outer rotor. In the description of the third embodiment below, the same elements as those of the first embodiment are given the same reference signs, and differences from the above-described first embodiment will be mainly described.

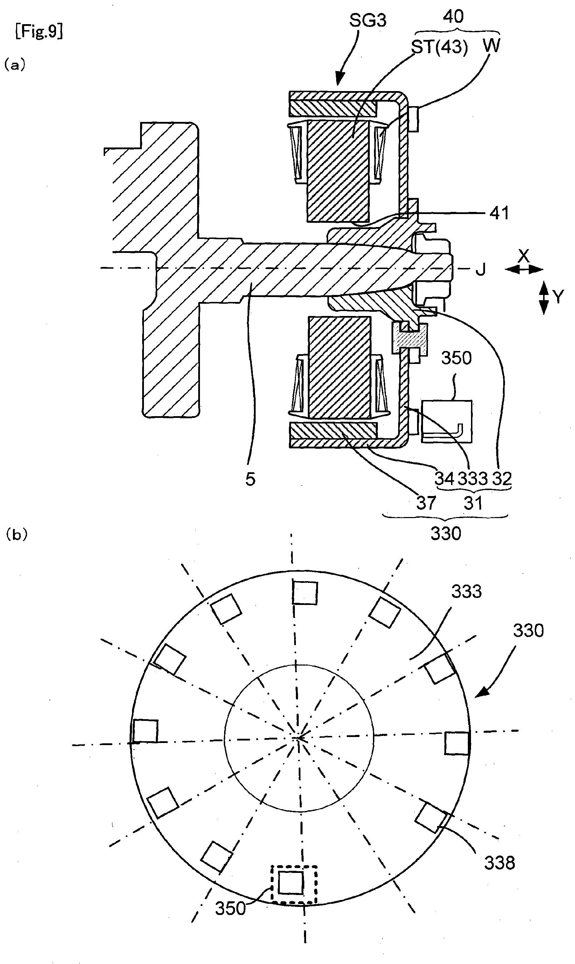

Fig. 9(a) is a cross-sectional view showing, on an enlarged scale, a starter motor and therearound of an engine unit according to a third embodiment of the present invention. Fig. 9(b) shows an outer rotor as seen in the direction of rotation axis of the crankshaft.

In this embodiment, a plurality of detection object parts 338 are provided on an outer surface of an outer rotor 330. More specifically, the plurality of detection object parts 338 are provided on an external surface of the outer rotor 330. The external surface of the outer rotor 330 is in a plane intersecting the axis of the crankshaft 5. The plurality of detection object parts 338 are provided on a bottom wall portion 333 of the outer rotor 330. A rotor position detection device 350 is provided at a position facing each of the plurality of detection object parts 338 during rotation of the outer rotor 330. The rotor position detection device 350 faces the bottom wall portion 333 of the outer rotor 30.

Similarly to the engine unit EU of the first embodiment, an engine unit including a starter motor SG3 shown in Fig. 9(a) and Fig. 9(b) is able to supply a current to the multi-phase stator windings W based on an electrical signal in the detection-purpose winding 51, the electrical signal varying along with rotation of the crankshaft 5. Accordingly, the capability of quick start can be ensured, the capability being comparable to that of an engine unit including a Hall IC, for example.

### [Motorcycle]

Fig. 10 is a diagram showing an external appearance of a vehicle to which the engine unit according to any of the first to third embodiments is mounted.

A vehicle A shown in Fig. 10 includes the engine unit EU according to any of the first to third embodiments described above, a vehicle body 101, wheels 102 and 103, and a battery 14. The engine unit EU mounted to the vehicle A drives the wheel 103 that is a drive wheel, thus causing the vehicle A to travel by rotating the wheel 103.

In the vehicle A shown in Fig. 10, the four-stroke engine unit for use in vehicle is mounted. The four-stroke engine unit has improved vehicle mountability with a simple structure and also has a heat resistance with the capability of quick start ensured. Accordingly, the vehicle A can be made compact as a whole.

The vehicle A shown in Fig. 10 is a motorcycle. The vehicle of the present invention is not limited to motorcycles. Examples of the vehicle of the present invention include a scooter type motorcycle, a moped type motorcycle, an off-road type motorcycle, and an on-road type motorcycle. Saddle-ride type vehicles other than motorcycles are also acceptable. For example, an ATV (All-Terrain Vehicle) is acceptable. The vehicle of the present invention is not limited to saddle-ride type vehicles, and may be a four-wheeled vehicle including a passenger compartment, for example.

In the embodiment, the control device CT that switches the state of conduction in accordance with a predefined pattern when the measured electrical angle estimate reaches a predetermined value, is illustrated as one example of the control device that performs on/off-operation of a plurality of switching parts at predefined timings. This, however, does not limit the control device of the present invention. In a conceivable example, when the starter motor SG is stopped, the control device causes a current having such a low level that the motor is not rotated to flow, detects the stop position of the outer rotor based on rise characteristics of the current, and starts conduction in a pattern in accordance with the detected position.

The embodiment illustrates the control device CT that shifts from the control mode for starting forward rotation of the crankshaft 5 to the control mode for accelerating the rotation based on the electrical signal in the detection-purpose winding 51. This, however, does not limit the control device of the present invention. For example, the shifting may be made after elapse of a predetermined time period since the control device starts rotation of the crankshaft.

In the embodiment, the plurality of detection object parts 38 having the same positional relationship relative to the magnetic pole face pairs 37p are illustrated as an example of the plurality of detection object parts. This, however, does not limit the plurality of detection object parts of the present invention. For example, it may be acceptable that the positional relationships of the plurality of detection object parts relative to the magnetic pole face pairs 37p are different from one another, as long as the positional relationship of each of the plurality of detection object parts relative to the magnetic pole face pair 37p is known in advance.

In the embodiment, the detection object parts 38 that are formed integrally with a yoke portion made of iron are illustrated as an example of the plurality of detection object parts that are magnetically detectable. The detection object part of the present invention, however, is not limited to a projection. For example, it may be a recess or an opening. Furthermore, the detection object part of the present invention may be a part separate from the yoke portion. The detection object part of the present invention may not necessarily be made of iron. It may be a magnet. In such a case, it is not necessary that the rotor position detection device includes a magnet.

The plurality of detection object parts of the present invention, are not limited to be formed of plurality of objects. The plurality of detection object parts may be formed of physically single object. The plurality of detection object parts may be formed of an object including a plurality of magnetized portions arranged so as to alternate in polarity with respect to the circumferential direction.

In the embodiment, the detection object parts 38 arranged in a line extending in the circumferential direction of the outer rotor 30 are illustrated as an example of the plurality of detection object parts. In the present invention, however, it is not indispensable that the plurality of detection object parts are arranged in a line extending in the circumferential direction of the outer rotor 30. For example, a staggered arrangement is also acceptable in which the detection object parts are partially misaligned with respect to the direction of rotation axis of the rotor.

In the embodiment, the control device CT that renders the multi-phase stator windings W conducting one after another at timings with gradually decreasing intervals is illustrated as an example of the control device. This, however, does not limit the control device of the present invention. For example, it may be also acceptable that the multi-phase stator windings are rendered conducting one after another at timings with predetermined equal intervals. Alternatively, the interval may decrease or increase with elapse of time.

In the embodiment, the plurality of detection object parts 38 that are arranged such that not all of them are at equal intervals but there are equal-interval positions (for example, the specified positions) and a position (missing position) where none of them is arranged, is illustrated as an example of the plurality of detection object parts. This, however, does not limit the plurality of detection object parts of the present invention. All of the plurality of detection object parts may be arranged at equal intervals.

In the embodiment, a three-phase brushless rotating electrical machine is illustrated as an example of the starter motor. In the present invention, however, it is not indispensable that the stator windings of the starter motor have a three-phase configuration. For example, two phases, four or more phases, and the like, may be employed.

Although the embodiment illustrates the case where the starter motor SG functions also as a generator, the starter motor SG may not necessarily serve as a generator in the present invention. For example, the starter motor SG may be a device dedicated to engine start.

In the embodiment, the air-cooled four-stroke engine body E is illustrated as an example of the four-stroke engine body E. In the present invention, however, the four-stroke engine body is not limited to air-cooled ones.

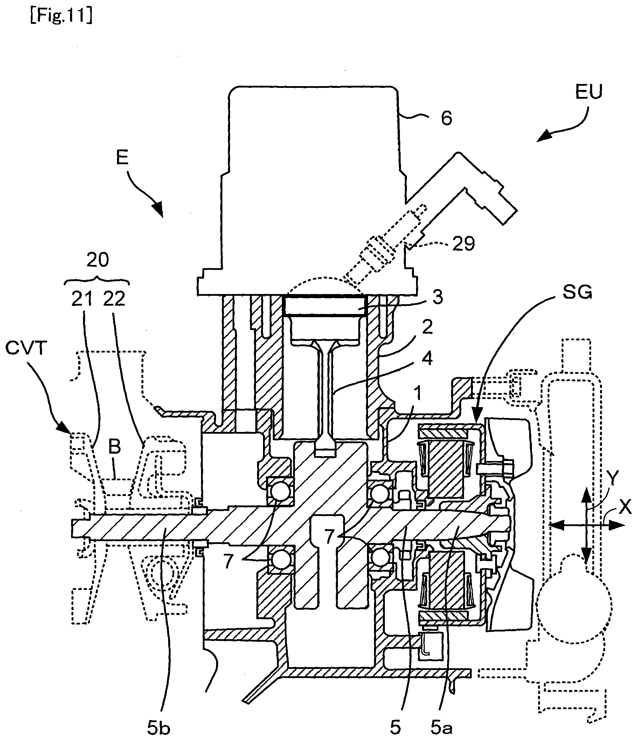

Fig. 11 is a partial cross-sectional view showing an engine unit including a water-cooled four-stroke engine body E. The present invention is applicable to an engine unit EU including the water-cooled four-stroke engine body E shown in Fig. 11.

The embodiment illustrates the case where the four-stroke engine body E is a single-cylinder engine. The engine of the present invention, however, is not particularly limited as long as the engine has a high-load region and a low-load region. Thus, a multi-cylinder engine is also adoptable. Examples of the multi-cylinder engine include a straight single-cylinder engine, a parallel double-cylinder engine, a straight double-cylinder engine, a V-type double-cylinder engine, and a horizontal opposed double-cylinder engine. The number of cylinders included in the multi-cylinder engine is not particularly limited. The multi-cylinder engine may be, for example, a four-cylinder engine. Here, some of four-cylinder engines have no low-load region. For example, a four-cylinder engine configured such that compression strokes of cylinders occur at equal intervals (a four-cylinder engine configured such that explosion occurs at equal intervals) may be mentioned. Such an engine having no low-load region does not conform to the definition of the engine of the present invention.

The present invention is not limited to the above-described examples. For example, the following configurations (12) and (17) are adoptable. The above-described embodiments may be mentioned as an example of embodiments of the following configurations (12) to (17).
(11) The engine unit according to any one of (1) to (4), wherein
   the control device includes an on/off-operation storage unit that stores data relating to on/off-operation of the plurality of switching parts,
   the control device shifts from a control mode for starting rotation of the crankshaft to a control mode for accelerating the forward rotation of the crankshaft, the control mode for starting forward rotation of the crankshaft being a mode in which, in a state where the crankshaft is stopped, forward rotation of the crankshaft is started by performing on/off-operation of the plurality of switching parts at predefined timings to supply a current to the multi-phase stator windings, the predefined timing being based on the data in the on/off-operation storage unit, the control mode for accelerating the forward rotation of the crankshaft being a mode in which the forward rotation of the crankshaft is accelerated by performing on/off-operation of the plurality of switching parts at timings to supply a current to the multi-phase stator windings, the timings being based on an electrical signal flowing in the detection-purpose winding of the rotor position detection device, the electrical signal varying depending on a variation in magnetic condition caused by movement of the plurality of detection object parts along with the forward rotation of the crankshaft.
   In the configuration of (12), the on/off-operation storage unit is provided. The on/off-operation storage unit stores data relating to on/off-operation of the plurality of switching parts. The data include data of, for example, an operation timing, the frequency itself, algorithms for calculating and modifying the operation timing and the frequency, initial values, and coefficients. In the state where the crankshaft is stopped, on/off-operation of the plurality of switching parts is performed based on the data stored in the on/off-operation storage unit, to supply a current to the multi-phase stator windings, so that forward rotation of the crankshaft is started. Therefore, even when the crankshaft is stopped, forward rotation of the crankshaft can be started. In the control based on such pre-stored data, typically, increasing the rotation speed is less easy because such a control aims to avoid loss of synchronism. In this respect, the control device of (12) is configured to, in a period at least from the start of forward rotation of the crankshaft and before the start of combustion of the four-stroke engine body, perform on/off-operation of the plurality of switching parts based on an electrical signal in the detection-purpose winding of the rotor position detection device, the electrical signal varying depending on a variation in the magnetic condition caused by movement of the plurality of detection object parts provided on the rotor. That is, the control device shifts to a control mode of accelerating the forward rotation of the crankshaft of the four-stroke engine by supplying a current to the multi-phase stator windings based on the electrical signal in the detection-purpose winding. Accordingly, shifting to the control mode based on a variation in the electrical signal in the detection-purpose winding is enabled with minimizing the control based on the pre-stored data. As a result, the capability of quick start can be ensured, the capability being comparable to that of an engine unit including a Hall IC.
(13) The engine unit according to any one of (1) to (3), wherein
   the control device includes an initial operation unit that, at least in a state where the crankshaft is stopped, generates an electrical signal for causing on/off-operation of the plurality of switching parts,
   in a state where the crankshaft is stopped, the control device starts forward rotation of the crankshaft by performing on/off-operation of the plurality of switching parts to supply a current to the multi-phase stator windings based on the electrical signal generated by the initial operation unit, and in a period from the start of forward rotation of the crankshaft to start of combustion of the four-stroke engine body, the control device shifts to a control mode of accelerating the forward rotation of the crankshaft of the four-stroke engine by performing on/off-operation of the plurality of switching parts to supply a current to the multi-phase stator windings based on an electrical signal in the detection-purpose winding of the rotor position detection device, the electrical signal in the detection-purpose winding varying depending on a variation in magnetic condition caused by movement of the plurality of detection object parts provided on the rotor.
   The configuration of (13) includes the initial operation unit that generates an electrical signal for causing on/off-operation of the plurality of switching parts at least in the state where the crankshaft is stopped. In the state where the crankshaft is stopped, forward rotation of the crankshaft is started by performing on/off-operation of the plurality of switching parts to supply a current to multi-phase stator windings based on the electrical signal generated by the initial operation unit. This enables forward rotation of the crankshaft to be started even in a state where the electrical signal in the detection-purpose winding does not vary, that is, in a state where the crankshaft is stopped. In the control based on the electrical signal generated by such an initial operation unit, typically, increasing the rotation speed is less easy because such a control aims to avoid loss of synchronism. In this respect, the control device of (13) is configured to, in a period at least from the start of forward rotation of the crankshaft and before the start of combustion of the four-stroke engine body, perform on/off-operation of the plurality of switching parts based on an electrical signal in the detection-purpose winding of the rotor position detection device, the electrical signal varying depending on a variation in the magnetic condition caused by movement of the plurality of detection object parts provided on the rotor. That is, the control device shifts to a control mode of accelerating the forward rotation of the crankshaft of the four-stroke engine by supplying a current to the multi-phase stator windings based on the electrical signal in the detection-purpose winding. Accordingly, shifting to the control mode based on a variation in the electrical signal in the detection-purpose winding is enabled with minimizing the control based on the electrical signal generated by the initial operation unit. As a result, the capability of quick start can be ensured, the capability being comparable to that of an engine unit including a Hall IC.
(14) The engine unit according to (13), wherein
   in a state where the crankshaft is stopped, the control device starts forward rotation of the crankshaft by performing on/off-operation of the plurality of switching parts to supply a current to the multi-phase stator windings based on the electrical signal generated by the initial operation unit; then the control device rotates the crankshaft in a forward direction by performing on/off-operation of the plurality of switching parts with decreasing intervals to supply a current to the multi-phase stator windings based on the electrical signal generated by the initial operation unit; and in a period from the start of forward rotation of the crankshaft to start of combustion of the four-stroke engine body, the control device shifts to a control mode of accelerating the forward rotation of the crankshaft of the four-stroke engine by performing on/off-operation of the plurality of switching parts to supply a current to the multi-phase stator windings based on an electrical signal in the detection-purpose winding of the rotor position detection device, the electrical signal in the detection-purpose winding varying depending on a variation in magnetic condition caused by movement of the plurality of detection object parts provided on the rotor.
   In the configuration of (14), on/off-operation of the plurality of switching parts is performed based on the electrical signal generated by the initial operation unit, so as to rotate the crankshaft in the forward direction while decreasing the intervals of current supply to the multi-phase stator windings. This enables the rotation speed of the crankshaft to be gradually increased. Accordingly, the capability of quick start is further improved.
(15) The engine unit according to (2), wherein
   the control device includes:
   a plurality of detection object parts provided on an outer surface of the outer rotor, the plurality of detection object parts having the same positional relationship relative to the magnetic pole face pairs; and
   a rotor position detection device provided at a position facing each of the plurality of detection object parts during rotation of the outer rotor, the plurality of detection object parts each having the same positional relationship relative to the magnetic pole face pairs, the rotor position detection device including a detection-purpose winding provided separately from the stator windings,
   the control device shifts from the control mode for starting forward rotation of the crankshaft to the control mode for accelerating the forward rotation of the crankshaft, based on an electrical signal in the detection-purpose winding of the rotor position detection device, the electrical signal varying depending on a variation in magnetic condition caused by movement of the plurality of detection object parts having the same positional relationship relative to the magnetic pole face pairs,
   the control device accelerates the forward rotation of the crankshaft by performing on/off-operation of the plurality of switching parts at timings to supply a current to the multi-phase stator windings, the timings being based on an electrical signal flowing in the detection-purpose winding of the rotor position detection device, the electrical signal varying depending on a variation in magnetic condition caused by movement, along with the forward rotation of the crankshaft, of the plurality of detection object parts having the same positional relationship relative to the magnetic pole face pairs.
(16) The engine unit according to (2) or (3), wherein
   the control device includes:
   a plurality of detection object parts provided on an outer surface of the outer rotor, the plurality of detection object parts being arranged at angular intervals of [360 degrees / (a positive divisor of the number of magnetic pole face pairs, the positive divisor greater than one)] with respect to the circumferential direction; and
   a rotor position detection device provided at a position facing each of the plurality of detection object parts during rotation of the outer rotor, the plurality of detection object parts provided on the outer surface of the outer rotor at angular intervals of [360 degrees / (a positive divisor of the number of magnetic pole face pairs, the positive divisor greater than one)] with respect to the circumferential direction, the rotor position detection device including a detection-purpose winding provided separately from the stator windings,
   the control device shifts from the control mode for starting forward rotation of the crankshaft to the control mode for accelerating the forward rotation of the crankshaft, based on an electrical signal in the detection-purpose winding of the rotor position detection device, the electrical signal varying depending on a variation in magnetic condition caused by movement of the plurality of detection object parts that are provided on the outer surface of the outer rotor at angular intervals of [360 degrees / (a positive divisor of the number of magnetic pole face pairs, the positive divisor greater than one)] with respect to the circumferential direction,
   the control device accelerates the forward rotation of the crankshaft by performing on/off-operation of the plurality of switching parts at timings to supply a current to the multi-phase stator windings, the timings being based on an electrical signal flowing in the detection-purpose winding of the rotor position detection device, the electrical signal varying depending on a variation in magnetic condition caused by movement, along with the forward rotation of the crankshaft, of the plurality of detection object parts that are provided on the outer surface of the outer rotor at angular intervals of [360 degrees / (a positive divisor of the number of magnetic pole face pairs, the positive divisor greater than one)] with respect to the circumferential direction.
(17) The engine unit according to any one of (2) to (4), wherein the control device includes:
   a plurality of detection object parts provided on an outer surface of the outer rotor, the plurality of detection object parts being spaced by a plurality of substantially equal intervals and one different interval from the plurality of substantially equal intervals; and
   a rotor position detection device provided at a position facing each of the plurality of detection object parts during rotation of the outer rotor, the plurality of detection object parts spaced by the plurality of substantially equal intervals and the one different interval from the plurality of substantially equal intervals, the rotor position detection device including a detection-purpose winding provided separately from the stator windings,
   the control device shifts from the control mode for starting forward rotation of the crankshaft to the control mode for accelerating the forward rotation of the crankshaft, based on an electrical signal in the detection-purpose winding of the rotor position detection device, the electrical signal varying depending on a variation in magnetic condition caused by movement of the plurality of detection object parts that are spaced by the plurality of substantially equal intervals and the one different interval from the plurality of substantially equal intervals.
   the control device accelerates the forward rotation of the crankshaft by performing on/off-operation of the plurality of switching parts at timings to supply a current to the multi-phase stator windings, the timings being based on an electrical signal flowing in the detection-purpose winding of the rotor position detection device, the electrical signal varying depending on a variation in magnetic condition caused by movement, along with the rotation of the crankshaft, of the plurality of detection object parts that are spaced by the plurality of substantially equal intervals and the one different interval from the plurality of substantially equal intervals.

It should be understood that the terms and expressions used herein are for descriptions and have no intention to be construed in a limited manner, do not eliminate any equivalents of features shown and mentioned herein, and allow various modifications falling within the claimed scope of the present invention.

The present invention may be embodied in many different forms. The present disclosure is to be considered as providing examples of the principles of the invention. A number of illustrative embodiments are described herein with the understanding that such examples are not intended to limit the invention to preferred embodiments described herein and/or illustrated herein.

While some illustrative embodiments of the invention have been described herein, the present invention is not limited to the various preferred embodiments described herein. The present invention includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to."

### Reference Signs List

- A: vehicle
- CT: control device
- E: four-stroke engine body
- EU: engine unit
- SG, SG2, SG3: starter motor
- SL: slot
- W: stator winding
- 5: crankshaft
- 30, 330: outer rotor
- 37a, 237a: magnetic pole face
- 37p, 237p: magnetic pole face pair
- 38, 238, 338: detection object part
- 40: inner stator
- 50, 350: rotor position detection device
- 51: detection-purpose winding
- 61: inverter
- 611 to 616: switching part
- 623: on/off-operation storage unit
- 624: initial operation unit

## Claims

1. An engine unit (EU) mounted to a vehicle (A), the engine unit (EU) comprising:
a four-stroke engine body (E) including, during four strokes with combustion stopped, a high-load region (TH) in which a load on rotation of a crankshaft (5) is high and a low-load region (TL) in which a load on rotation of the crankshaft (5) is lower than that of the high-load region (TH), the high-load region (TH) including a compression stroke, the low-load region (TL) including no compression stroke, the low-load region (TL) being wider than or equal to the high-load region (TH);
a starter motor (SG, SG2, SG3) including an inner stator (40) and an outer rotor (30, 330), the inner stator (40) including a stator core (ST) and multi-phase stator windings (W), the stator core (ST) including a plurality of teeth (43) provided at intervals with respect to a circumferential direction, the multi-phase stator windings (W) being wound on the plurality of teeth (43), the outer rotor (30, 330) including a permanent magnet part (37) and a back yoke portion (34), the permanent magnet part (37) being arranged outside the inner stator (40) with respect to a radial direction, the permanent magnet part (37) including, on a surface thereof facing the inner stator (40), a plurality of magnetic pole faces (37a) that are arranged in the circumferential direction, the back yoke portion (34) being arranged outside the permanent magnet part (37) with respect to the radial direction, the outer rotor (30, 330) being rotated along with rotation of the crankshaft (5); and
a control device (CT) connected to the multi-phase stator windings (W) of the inner stator (40), the control device (CT) supplying a current from a battery (14) included in the vehicle (A) to the multi-phase stator windings (W),
the control device (CT) including
a plurality of detection object parts (38, 238, 338) provided on an outer surface of the outer rotor (30, 330) and arranged at intervals with respect to the circumferential direction,
a rotor position detection device (50, 350) provided at a position facing each of the plurality of detection object parts (38, 238, 338) during rotation of the outer rotor (30, 330), the rotor position detection device (50, 350) including a detection-purpose winding (51) provided separately from the stator windings (W), and
a plurality of switching parts (611 - 616) connected to the multi-phase stator windings (W), the plurality of switching parts (611 - 616) switching, by on/off-operation thereof, allowing and blocking of a current flow between the multi-phase stator windings (W) and the battery (14),
the control device (CT) shifting from a control mode for starting forward rotation of the crankshaft (5) to a control mode for accelerating the rotation of the crankshaft (5), the control mode for starting forward rotation of the crankshaft (5) being a mode in which, in a state where the crankshaft is stopped, rotation of the crankshaft (5) is started by performing on/off-operation of the plurality of switching parts (611 - 616) at predefined timings to supply a current to the multi-phase stator windings (W), the control mode for accelerating the rotation of the crankshaft (5) being a mode in which the forward rotation of the crankshaft (5) is accelerated by performing on/off-operation of the plurality of switching parts (611 - 616) at timings to supply a current to the multi-phase stator windings (W), the timings being based on an electrical signal flowing in the detection-purpose winding (51) of the rotor position detection device (50, 350), the electrical signal varying depending on a variation in magnetic condition caused by movement of the plurality of detection object parts (38, 238, 338) along with the forward rotation of the crankshaft (5).

2. The engine unit (EU) according to claim 1, wherein
the control device (CT) shifts from the control mode for starting forward rotation of the crankshaft (5) to the control mode for accelerating the forward rotation of the crankshaft (5), based on an electrical signal in the detection-purpose winding (51) of the rotor position detection device (50, 350), the electrical signal varying depending on a variation in magnetic condition caused by movement of the plurality of detection object parts (38, 238, 338).

3. The engine unit (EU) according to claim 1 or 2, wherein
the control device (CT) includes:
the plurality of detection object parts (38, 238, 338) provided on an outer surface of the outer rotor (30, 330), the plurality of detection object parts (38, 238, 338) each having the same positional relationship relative to a corresponding one of magnetic pole face pairs (37p) each including a pair of the magnetic pole faces (37a); and
the rotor position detection device (50, 350) provided at a position facing each of the plurality of detection object parts (38, 238, 338) during rotation of the outer rotor (30, 330), the plurality of detection object parts (38, 238, 338) each having the same positional relationship relative to the corresponding one of the magnetic pole face pairs (37p), the rotor position detection device (50, 350) including a detection-purpose winding (51) provided separately from the stator windings,
the control device (CT) accelerates the forward rotation of the crankshaft (5) by performing on/off-operation of the plurality of switching parts (611 - 616) at timings to supply a current to the multi-phase stator windings (W), the timings being based on an electrical signal flowing in the detection-purpose winding (51) of the rotor position detection device (50, 350), the electrical signal varying depending on a variation in magnetic condition caused by movement, along with the forward rotation of the crankshaft (5), of the plurality of detection object parts (38, 238, 338) each having the same positional relationship relative to the corresponding one of the magnetic pole face pairs (37p).

4. The engine unit (EU) according to any one of claims 1 to 3, wherein the control device (CT) includes:
the plurality of detection object parts (38, 238, 338) provided on an outer surface of the outer rotor (30, 330), the plurality of detection object parts (38, 238, 338) being arranged at angular intervals of [360 degrees / (a positive divisor of the number of magnetic pole face pairs (37p), the positive divisor greater than one)] with respect to the circumferential direction; and
the rotor position detection device (50, 350) provided at a position facing each of the plurality of detection object parts (38, 238, 338) during rotation of the outer rotor (30, 330), the plurality of detection object parts (38, 238, 338) provided on the outer surface of the outer rotor (30, 330) at angular intervals of [360 degrees / (a positive divisor of the number of magnetic pole face pairs (37p), the positive divisor greater than one)] with respect to the circumferential direction, the rotor position detection device (50, 350) including a detection-purpose winding (51) provided separately from the stator windings,
the control device (CT) accelerates the forward rotation of the crankshaft (5) by performing on/off-operation of the plurality of switching parts (611 - 616) at timings to supply a current to the multi-phase stator windings (W), the timings being based on an electrical signal flowing in the detection-purpose winding (51) of the rotor position detection device (50, 350), the electrical signal varying depending on a variation in magnetic condition caused by movement, along with the forward rotation of the crankshaft (5), of the plurality of detection object parts (38, 238, 338) provided on the outer surface of the outer rotor (30, 330) at angular intervals of [360 degrees / (a positive divisor of the number of magnetic pole face pairs (37p), the positive divisor greater than one)] with respect to the circumferential direction.

5. The engine unit (EU) according to any one of claims 1 to 4, wherein
the control device (CT) includes:
the plurality of detection object parts (38, 238, 338) provided on an outer surface of the outer rotor (30, 330), the plurality of detection object parts (38, 238, 338) being spaced by a plurality of substantially equal intervals and one different interval from the plurality of substantially equal intervals; and
the rotor position detection device (50, 350) provided at a position facing each of the plurality of detection object parts (38, 238, 338) during rotation of the outer rotor (30, 330), the plurality of detection object parts (38, 238, 338) spaced by the plurality of substantially equal intervals and the one different interval from the plurality of substantially equal intervals, the rotor position detection device (50, 350) including a detection-purpose winding (51) provided separately from the stator windings,
the control device (CT) accelerates the forward rotation of the crankshaft (5) by performing on/off-operation of the plurality of switching parts (611 - 616) at timings to supply a current to the multi-phase stator windings (W), the timings being based on an electrical signal flowing in the detection-purpose winding (51) of the rotor position detection device (50, 350), the electrical signal varying depending on a variation in magnetic condition caused by movement, along with the forward rotation of the crankshaft (5), of the plurality of detection object parts (38, 238, 338) that are spaced by the plurality of substantially equal intervals and the one different interval from the plurality of substantially equal intervals.

6. The engine unit (EU) according to any one of claims 1 to 5, wherein the control device (CT) accelerates the forward rotation of the crankshaft (5) by performing on/off-operation of the plurality of switching parts (611 - 616) at timings corresponding to 120-degree conduction to supply a current to the multi-phase stator windings (W), based on an electrical signal flowing in the detection-purpose winding (51) of the rotor (30, 330) position detection device (50, 350), the electrical signal varying depending on a variation in magnetic condition caused by movement of the plurality of detection object parts (38, 238, 338) along with the forward rotation of the crankshaft (5).

7. The engine unit (EU) according to any one of claims 1 to 5, wherein
the control device (CT) accelerates the forward rotation of the crankshaft (5) by performing on/off-operation of the plurality of switching parts (611 - 616) by vector control to supply a current to the multi-phase stator windings (W), based on an electrical signal flowing in the detection-purpose winding (51) of the rotor position detection device (50, 350), the electrical signal varying depending on a variation in magnetic condition caused by movement of the plurality of detection object parts (38, 238, 338) along with the forward rotation of the crankshaft (5).

8. The engine unit (EU) according to any one of claims 1 to 7, wherein
the control device (CT) includes a combustion controller (63) that controls combustion of the four-stroke engine body (E), after shifting from the control mode for starting forward rotation of the crankshaft (5) to the control mode for accelerating the forward rotation of the crankshaft (5), the control device (CT) controls the combustion controller (63) based on an electrical signal in the detection-purpose winding (51) of the rotor position detection device (50, 350), the electrical signal varying depending on a variation in magnetic condition caused by movement of the plurality of detection object parts (38, 238, 338) provided on the rotor (30, 330).

9. The engine unit (EU) according to any one of claims 1 to 8, wherein
after shifting from the control mode for starting forward rotation of the crankshaft (5) to the control mode for accelerating the forward rotation of the crankshaft (5) and starting combustion of the four-stroke engine body (E), the control device (CT) control a current supplied from the plurality of stator windings to the battery (14) by performing on/off-operation of the plurality of switching parts (611 - 616) based on an electrical signal in the detection-purpose winding (51) of the rotor position detection device (50, 350), the electrical signal varying depending on a variation in magnetic condition caused by movement of the plurality of detection object parts (38, 238, 338) provided on the rotor (30, 330).

10. The engine unit (EU) according to any one of claims 1 to 9, wherein
during a predetermined time period after starting combustion of the four-stroke engine body (E), the control device (CT) accelerates the forward rotation of the crankshaft (5) by performing on/off-operation of the plurality of switching parts (611 - 616) at timings to supply a current to the multi-phase stator windings (W), the timings being based on an electrical signal flowing in the detection-purpose winding (51) of the rotor position detection device (50, 350), the electrical signal varying depending on a variation in magnetic condition caused by movement.

11. A vehicle (A) comprising the engine unit (EU) according to any one of claims 1 to 10.

## Patentansprüche

1. Eine Motoreinheit (EU), die an einem Fahrzeug (A) befestigt ist, wobei die Motoreinheit (EU) folgende Merkmale aufweist:
einen Viertaktmotor-Körper (E), der während vier Takten mit gestoppter Verbrennung eine Region hoher Last (TH), in der eine Last auf eine Drehung einer Kurbelwelle (5) hoch ist, und eine Region niedriger Last (TL) aufweist, in der eine Last auf eine Drehung der Kurbelwelle (5) niedriger ist als diejenige der Region hoher Last (TH), wobei die Region hoher Last (TH) einen Verdichtungstakt aufweist, die Region niedriger Last (TL) keinen Verdichtungstakt aufweist, wobei die Region niedriger Last (TL) breiter als oder gleich groß wie die Region hoher Last (TH) ist;
einen Anlassermotor (SG, SG2, SG3) mit einem inneren Stator (40) und einem äußeren Rotor (30, 330), wobei der innere Stator (40) einen Statorkern (ST) und Mehrphasen-Stator-Wicklungen (W) aufweist, wobei der Statorkern (ST) eine Mehrzahl von Zähnen (43) aufweist, die in Abständen in Bezug auf eine Umfangsrichtung vorgesehen sind, wobei die Mehrphasen-Stator-Wicklungen (W) an die Mehrzahl von Zähnen (43) gewickelt sind, wobei der äußere Rotor (30, 330) einen Permanentmagnetteil (37) und einen hinteren Jochabschnitt (34) aufweist, wobei der Permanentmagnetteil (37) in Bezug auf eine Radialrichtung außerhalb des inneren Stators (40) angeordnet ist, wobei der Permanentmagnetteil (37) auf einer Oberfläche desselben, die dem inneren Stator (40) zugewandt ist, eine Mehrzahl von Magnetpolflächen (37a) aufweist, die in der Umfangsrichtung angeordnet sind, wobei der hintere Jochabschnitt (34) in Bezug auf die Radialrichtung außerhalb des Permanentmagnetteils (37) angeordnet ist, wobei der äußere Rotor (30, 330) zusammen mit einer Drehung der Kurbelwelle (5) gedreht wird; und
eine Steuervorrichtung (CT), die mit den Mehrphasen-Stator-Wicklungen (W) des inneren Stators (40) verbunden ist, wobei die Steuervorrichtung (CT) einen Strom von einer Batterie (14), die in dem Fahrzeug (A) beinhaltet ist, an die Mehrphasen-Stator-Wicklungen (W) liefert,
wobei die Steuervorrichtung (CT) folgende Merkmale aufweist:
eine Mehrzahl von Erfassungsobjektteilen (38, 238, 338), die an einer äußeren Oberfläche des äußeren Rotors (30, 330) vorgesehen und in Bezug auf die Umfangsrichtung in Abständen angeordnet sind,
eine Rotorpositionserfassungsvorrichtung (50, 350), die an einer Position vorgesehen ist, die jedem der Mehrzahl von Erfassungsobjektteilen (38, 238, 338) während einer Drehung des äußeren Rotors (30, 330) zugewandt ist, wobei die Rotorpositionserfassungsvorrichtung (50, 350) eine Erfassungszweck-Wicklung (51) aufweist, die separat von den Statorwicklungen (W) vorgesehen ist, und
eine Mehrzahl von Umschaltteilen (611-616), die mit den Mehrphasen-Stator-Wicklungen (W) verbunden sind, wobei die Mehrzahl von Umschaltteilen (611-616) durch einen An/Aus-Betrieb derselben umschaltet, was einen Stromfluss zwischen den Mehrphasen-Stator-Wicklungen (W) und der Batterie (14) erlaubt bzw. blockiert,
wobei die Steuervorrichtung (CT) von einem Steuermodus zum Starten einer Vorwärtsdrehung der Kurbelwelle (5) zu einem Steuermodus zum Beschleunigen der Drehung der Kurbelwelle (5) wechselt, wobei der Steuermodus zum Starten einer Vorwärtsdrehung der Kurbelwelle (5) ein Modus ist, bei dem in einem Zustand, in dem die Kurbelwelle gestoppt ist, eine Drehung der Kurbelwelle (5) gestartet wird durch ein Durchführen eines An/Aus-Betriebs der Mehrzahl von Umschaltteilen (611-616) zu vordefinierten Zeitgebungen, um einen Strom an die Mehrphasen-Stator-Wicklungen (W) zu liefern, wobei der Steuermodus zum Beschleunigen der Drehung der Kurbelwelle (5) ein Modus ist, bei dem die Vorwärtsdrehung der Kurbelwelle (5) beschleunigt wird durch Durchführen eines An/Aus-Betriebs der Mehrzahl von Umschaltteilen (611-616) zu Zeitgebungen, um einen Strom an die Mehrphasen-Stator-Wicklungen (W) zu liefern, wobei die Zeitgebungen auf einem elektrischen Signal basieren, das in der Erfassungszweck-Wicklung (51) der Rotorpositionserfassungsvorrichtung (50, 350) fließt, wobei das elektrische Signal abhängig von einer Variation eines Magnetzustands variiert, die bewirkt wird durch eine Bewegung der Mehrzahl von Erfassungsobjektteilen (38, 238, 338) zusammen mit der Vorwärtsdrehung der Kurbelwelle (5).

2. Die Motoreinheit (EU) gemäß Anspruch 1, bei der:
die Steuervorrichtung (CT) basierend auf einem elektrischen Signal in der Erfassungszweck-Wicklung (51) der Rotorpositionserfassungsvorrichtung (50, 350) von dem Steuermodus zum Starten einer Vorwärtsdrehung der Kurbelwelle (5) zu einem Steuermodus zum Beschleunigen der Vorwärtsdrehung der Kurbelwelle (5) wechselt, wobei das elektrische Signal abhängig von einer Variation eines Magnetzustands variiert, die bewirkt wird durch eine Bewegung der Mehrzahl von Erfassungsobjektteilen (38, 238, 338).

3. Die Motoreinheit (EU) gemäß Anspruch 1 oder 2, bei der:
die Steuervorrichtung (CT) folgende Merkmale aufweist:
die Mehrzahl von Erfassungsobjektteilen (38, 238, 338), die an einer äußeren Oberfläche des äußeren Rotors (30, 330) vorgesehen sind, wobei die Mehrzahl von Erfassungsobjektteilen (38, 238, 338) jeweils die gleiche Positionsbeziehung relativ zu einem entsprechenden von Magnetpolflächenpaaren (37p) aufweist, die jeweils ein Paar der Magnetpolflächen (37a) aufweisen; und
die Rotorpositionserfassungsvorrichtung (50, 350), die an einer Position vorgesehen ist, die jedem der Mehrzahl von Erfassungsobjektteilen (38, 238, 338) während einer Drehung des äußeren Rotors (30, 330) zugewandt ist, wobei die Mehrzahl von Erfassungsobjektteilen (38, 238, 338) jeweils die gleiche Positionsbeziehung relativ zu dem entsprechenden der Magnetpolflächenpaaren (37p) aufweist, wobei die Rotorpositionserfassungsvorrichtung (50, 350) eine Erfassungszweck-Wicklung (51) aufweist, die separat von den Statorwicklungen vorgesehen ist,
wobei die Steuervorrichtung (CT) die Vorwärtsdrehung der Kurbelwelle (5) beschleunigt durch Durchführen eines An/Aus-Betriebs der Mehrzahl von Umschaltteilen (611-616) zu Zeitgebungen, um einen Strom an die Mehrphasen-Stator-Wicklungen (W) zu liefern, wobei die Zeitgebungen auf einem elektrischen Signal basieren, das in der Erfassungszweck-Wicklung (51) der Rotorpositionserfassungsvorrichtung (50, 350) fließt, wobei das elektrische Signal abhängig von einer Variation eines Magnetzustands variiert, die bewirkt wird durch eine Bewegung, zusammen mit der Vorwärtsdrehung der Kurbelwelle (5), der Mehrzahl von Erfassungsobjektteilen (38, 238, 338), die jeweils die gleiche Positionsbeziehung relativ zu dem entsprechenden der Magnetpolflächenpaare (37p) aufweisen.

4. Die Motoreinheit (EU) gemäß einem der Ansprüche 1 bis 3, bei der:
die Steuervorrichtung (CT) folgende Merkmale aufweist:
die Mehrzahl von Erfassungsobjektteilen (38, 238, 338), die an einer äußeren Oberfläche des äußeren Rotors (30, 330) vorgesehen sind, wobei die Mehrzahl von Erfassungsobjektteilen (38, 238, 338) in Winkelabständen von [360 Grad/(ein positiver Divisor der Anzahl von Magnetpolflächenpaaren (37p), wobei der positive Divisor größer als eins ist)] in Bezug auf die Umfangsrichtung angeordnet ist; und
die Rotorpositionserfassungsvorrichtung (50, 350), die an einer Position vorgesehen ist, die jedem der Mehrzahl von Erfassungsobjektteilen (38, 238, 338) während einer Drehung des äußeren Rotors (30, 330) zugewandt ist, wobei die Mehrzahl von Erfassungsobjektteilen (38, 238, 338) an der äußeren Oberfläche des äußeren Rotors (30, 330) in Winkelabständen von [360 Grad/(ein positiver Divisor der Anzahl von Magnetpolflächenpaaren (37p), wobei der positive Divisor größer als eins ist)] in Bezug auf die Umfangsrichtung vorgesehen ist, wobei die Rotorpositionserfassungsvorrichtung (50, 350) eine Erfassungszweck-Wicklung (51) aufweist, die separat von den Statorwicklungen vorgesehen ist,
wobei die Steuervorrichtung (CT) die Vorwärtsdrehung der Kurbelwelle (5) beschleunigt durch Durchführen eines An/Aus-Betriebs der Mehrzahl von Umschaltteilen (611-616) zu Zeitgebungen, um einen Strom an die Mehrphasen-Stator-Wicklungen (W) zu liefern, wobei die Zeitgebungen auf einem elektrischen Signal basieren, das in der Erfassungszweck-Wicklung (51) der Rotorpositionserfassungsvorrichtung (50, 350) fließt, wobei das elektrische Signal abhängig von einer Variation eines Magnetzustands variiert, die bewirkt wird durch eine Bewegung, zusammen mit der Vorwärtsdrehung der Kurbelwelle (5), der Mehrzahl von Erfassungsobjektteilen (38, 238, 338), die an der äußeren Oberfläche des äußeren Rotors (30, 330) in Winkelabständen von [360 Grad/(ein positiver Divisor der Anzahl von Magnetpolflächenpaaren (37p), wobei der positive Divisor größer als eins ist)] in Bezug auf die Umfangsrichtung vorgesehen sind.

5. Die Motoreinheit (EU) gemäß einem der Ansprüche 1 bis 4, bei der:
die Steuervorrichtung (CT) folgende Merkmale aufweist:
die Mehrzahl von Erfassungsobjektteilen (38, 238, 338), die an einer äußeren Oberfläche des äußeren Rotors (30, 330) vorgesehen sind, wobei die Mehrzahl von Erfassungsobjektteilen (38, 238, 338) durch eine Mehrzahl im Wesentlichen gleicher Abstände und einen unterschiedlichen Abstand aus der Mehrzahl im Wesentlichen gleicher Abstände beabstandet ist; und
die Rotorpositionserfassungsvorrichtung (50, 350), die an einer Position vorgesehen ist, die jedem der Mehrzahl von Erfassungsobjektteilen (38, 238, 338) während einer Drehung des äußeren Rotors (30, 330) zugewandt ist, wobei die Mehrzahl von Erfassungsobjektteilen (38, 238, 338) durch eine Mehrzahl im Wesentlichen gleicher Abstände und den einen unterschiedlichen Abstand aus der Mehrzahl im Wesentlichen gleicher Abstände beabstandet ist, wobei die Rotorpositionserfassungsvorrichtung (50, 350) eine Erfassungszweck-Wicklung (51) aufweist, die separat von den Statorwicklungen vorgesehen ist,
wobei die Steuervorrichtung (CT) die Vorwärtsdrehung der Kurbelwelle (5) beschleunigt durch Durchführen eines An/Aus-Betriebs der Mehrzahl von Umschaltteilen (611-616) zu Zeitgebungen, um einen Strom an die Mehrphasen-Stator-Wicklungen (W) zu liefern, wobei die Zeitgebungen auf einem elektrischen Signal basieren, das in der Erfassungszweck-Wicklung (51) der Rotorpositionserfassungsvorrichtung (50, 350) fließt, wobei das elektrische Signal abhängig von einer Variation eines Magnetzustands variiert, die bewirkt wird durch eine Bewegung, zusammen mit der Vorwärtsdrehung der Kurbelwelle (5), der Mehrzahl von Erfassungsobjektteilen (38, 238, 338), die durch die Mehrzahl im Wesentlichen gleicher Abstände und den einen unterschiedlichen Abstand aus der Mehrzahl im Wesentlichen gleicher Abstände beabstandet sind.

6. Die Motoreinheit (EU) gemäß einem der Ansprüche 1 bis 5, bei der:
die Steuervorrichtung (CT) die Vorwärtsdrehung der Kurbelwelle (5) beschleunigt durch Durchführen eines An/Aus-Betriebs der Mehrzahl von Umschaltteilen (611-616) zu Zeitgebungen, die einer 120-Grad-Leitung entsprechen, um einen Strom an die Mehrphasen-Stator-Wicklungen (W) zu liefern, basierend auf einem elektrischen Signal, das in der Erfassungszweck-Wicklung (51) der Positionserfassungsvorrichtung (50, 350) des Rotors (30, 330) fließt, wobei das elektrische Signal abhängig von einer Variation eines Magnetzustands variiert, die bewirkt wird durch eine Bewegung der Mehrzahl von Erfassungsobjektteilen (38, 238, 338) zusammen mit der Vorwärtsdrehung der Kurbelwelle (5).

7. Die Motoreinheit (EU) gemäß einem der Ansprüche 1 bis 5, bei der:
die Steuervorrichtung (CT) die Vorwärtsdrehung der Kurbelwelle (5) beschleunigt durch Durchführen eines An/Aus-Betriebs der Mehrzahl von Umschaltteilen (611-616) durch Vektorsteuerung, um einen Strom an die Mehrphasen-Stator-Wicklungen (W) zu liefern, basierend auf einem elektrischen Signal, das in der Erfassungszweck-Wicklung (51) der Rotorpositionserfassungsvorrichtung (50, 350) fließt, wobei das elektrische Signal abhängig von einer Variation eines Magnetzustands variiert, die bewirkt wird durch eine Bewegung der Mehrzahl von Erfassungsobjektteilen (38, 238, 338) zusammen mit der Vorwärtsdrehung der Kurbelwelle (5).

8. Die Motoreinheit (EU) gemäß einem der Ansprüche 1 bis 7, bei der:
die Steuervorrichtung (CT) eine Verbrennungssteuerung (63) aufweist, die eine Verbrennung des Viertaktmotor-Körpers (E) steuert,
nach einem Wechseln von dem Steuermodus zum Starten einer Vorwärtsdrehung der Kurbelwelle (5) zu dem Steuermodus zum Beschleunigen der Vorwärtsdrehung der Kurbelwelle (5) die Steuervorrichtung (CT) die \/erbrennungssteuerung (63) basierend auf einem elektrischen Signal in der Erfassungszweck-Wicklung (51) der Rotorpositionserfassungsvorrichtung (50, 350) steuert, wobei das elektrische Signal abhängig von einer Variation eines Magnetzustands variiert, die bewirkt wird durch eine Bewegung der Mehrzahl von Erfassungsobjektteilen (38, 238, 338), die an dem Rotor (30, 330) vorgesehen sind.

9. Die Motoreinheit (EU) gemäß einem der Ansprüche 1 bis 8, bei der:
nach einem Wechseln von dem Steuermodus zum Starten einer Vorwärtsdrehung der Kurbelwelle (5) zu dem Steuermodus zum Beschleunigen der Vorwärtsdrehung der Kurbelwelle (5) und Starten einer Verbrennung des Viertaktmotor-Körpers (E) die Steuervorrichtung (CT) einen Strom, der von der Mehrzahl von Statorwicklungen an die Batterie (14) geliefert wird, steuert durch Durchführen eines An/Aus-Betriebs der Mehrzahl von Umschaltteilen (611-616) basierend auf einem elektrischen Signal in der Erfassungszweck-Wicklung (51) der Rotorpositionserfassungsvorrichtung (50, 350), wobei das elektrische Signal abhängig von einer Variation eines Magnetzustands variiert, die bewirkt wird durch eine Bewegung der Mehrzahl von Erfassungsobjektteilen (38, 238, 338), die an dem Rotor (30, 330) vorgesehen sind.

10. Die Motoreinheit (EU) gemäß einem der Ansprüche 1 bis 9, bei der:
während eines vorbestimmten Zeitraums nach einem Starten einer Verbrennung des Viertaktmotor-Körpers (E) die Steuervorrichtung (CT) die Vorwärtsdrehung der Kurbelwelle (5) beschleunigt durch Durchführen eines An/Aus-Betriebs der Mehrzahl von Umschaltteilen (611-616) zu Zeitgebungen, um einen Strom an die Mehrphasen-Stator-Wicklungen (W) zu liefern, wobei die Zeitgebungen auf einem elektrischen Signal basieren, das in der Erfassungszweck-Wicklung (51) der Rotorpositionserfassungsvorrichtung (50, 350) fließt, wobei das elektrische Signal abhängig von einer Variation des Magnetzustands variiert, die durch eine Bewegung bewirkt wird.

11. Ein Fahrzeug (A) mit der Motoreinheit (EU) gemäß einem der Ansprüche 1 bis 10.

## Revendications

1. Unité de moteur (EU) montée sur un véhicule (A), l'unité de moteur (EU) comprenant:
un corps de moteur à quatre temps (E) comportant, pendant quatre temps à combustion arrêtée, une zone de grande charge (TH) dans laquelle une charge à la rotation d'un vilebrequin (5) est élevée et une zone de faible charge (TL) dans laquelle la charge à la rotation du vilebrequin (5) est inférieure à celle de la zone de grande charge (TH), la zone de grande charge (TH) comportant une course de compression, la zone de faible charge (TL) ne comportant pas de course de compression, la région de faible charge (TL) étant plus large ou égale à la région de grande charge (TH);
un moteur de démarrage (SG, SG2, SG3) comportant un stator intérieur (40) et un rotor extérieur (30, 330), le stator intérieur (40) comportant un noyau de stator (ST) et des enroulements de stator multi-phase (W), le noyau de stator (ST) comportant une pluralité de dents (43) prévues à des intervalles par rapport à une direction circonférentielle, les enroulements de stator multi-phase (W) étant enroulés sur la pluralité de dents (43), le rotor extérieur (30, 330) comportant une partie d'aimant permanent (37) et une partie de culasse arrière (34), la partie d'aimant permanent (37) étant disposée à l'extérieur du stator intérieur (40) par rapport à une direction radiale, la partie d'aimant permanent (37) comportant, sur une surface de ce dernier faisant face au stator intérieur (40), une pluralité de faces de pôle magnétique (37a) qui sont disposées dans la direction circonférentielle, la partie de culasse arrière (34) étant disposée à l'extérieur de la partie d'aimant permanent (37) par rapport à la direction radiale, le rotor extérieur (30, 330) étant tourné ensemble avec une rotation du vilebrequin (5); et
un dispositif de commande (CT) connecté aux enroulements de stator multi-phase (W) du stator intérieur (40), le dispositif de commande (CT) alimentent un courant d'une batterie (14) inclusse dans le véhicule (A) vers les enroulements de stator multi-phase (W),
le dispositif de commande (CT) comportant
une pluralité de parties d'objet de détection (38, 238, 338) prévues sur une surface extérieure du rotor extérieur (30, 330) et disposées à des intervalles par rapport à la direction circonférentielle,
un dispositif de détection de position de rotor (50, 350) prévu en une position faisant face à chacune de la pluralité de parties d'objet de détection (38, 238, 338) pendant la rotation du rotor extérieur (30, 330), le dispositif de détection de position de rotor (50, 350) comportant un enroulement destiné à la détection (51) prévu séparément des enroulements de stator (W), et
une pluralité de parties de commutation (611 à 616) connectées aux enroulements de stator multi-phase (W), la pluralité de parties de commutation (611 à 616) commutant par une opération marche/arrêt de ces dernières, permettant et bloquant une circulation de courant entre les enroulements de stator multi-phase (W) et la batterie (14),
le dispositif de commande (CT) passant d'un mode de commande pour faire démarrer la rotation en avant du vilebrequin (5) à un mode de commande pour accélérer la rotation du vilebrequin (5), le mode de commande pour faire démarrer la rotation en avant du vilebrequin (5) étant un mode dans lequel, dans un état où le vilebrequin est arrêté, la rotation du vilebrequin (5) est démarrée en effectuant une opération de marche/arrêt de la pluralité de parties de commutation (611 à 616) à des moments prévus pour alimenter un courant vers les enroulements de stator multi-phase (W), le mode de commande pour accélérer la rotation du vilebrequin (5) étant un mode dans lequel la rotation en avant du vilebrequin (5) est accélérée en effectuant une opération de marche/arrêt de la pluralité de parties de commutation (611 à 616) à des moments prévus pour alimenter un courant vers les enroulements de stator multi-phase (W), les moments prévus étant basés sur un signal électrique circulant dans l'enroulement destiné à la détection (51) du dispositif de détection de position de rotor (50, 350), le signal électrique variant en fonction d'une variation de l'état magnétique provoquée par le mouvement de la pluralité de parties d'objet de détection (38, 238, 338) ensemble avec la rotation en avant du vilebrequin (5).

2. Unité de moteur (EU) selon la revendication 1, dans laquelle
le dispositif de commande (CT) passe du mode de commande pour faire démarrer la rotation en avant du vilebrequin (5) au mode de commande pour accélérer la rotation en avant du vilebrequin (5) sur base d'un signal électrique dans l'enroulement destiné à la détection (51) du dispositif de détection de position de rotor (50, 350), le signal électrique variant en fonction d'une variation de l'état magnétique provoquée par le mouvement de la pluralité de parties d'objet de détection (38, 238, 338).

3. Unité de moteur (EU) selon la revendication 1 ou 2, dans laquelle le dispositif de commande (CT) comporte:
la pluralité de parties d'objet de détection (38, 238, 338) prévues sur une surface extérieure du rotor extérieur (30, 330), la pluralité de parties d'objet de détection (38, 238, 338), présentant, chacune, le même rapport de position par rapport à l'une correspondante des paires de faces de pôle magnétique (37p), comportant, chacune, une paire de faces de pôle magnétique (37a); et
le dispositif de détection de position de rotor (50, 350) prévu en une position faisant face à chacune des parties d'objet de détection (38, 238, 338) pendant la rotation du rotor extérieur (30, 330), la pluralité de parties d'objet de détection (38, 238, 338) présentant, chacune, le même rapport de position par rapport à l'une correspondante des paires de faces de pôle magnétique (37p), le dispositif de détection de position de rotor (50, 350) comportant un enroulement destiné à la détection (51) prévu séparément des enroulements de stator,
le dispositif de commande (CT) accélère la rotation en avant du vilebrequin (5) en effectuant une opération de marche/arrêt de la pluralité de parties de commutation (611 à 616) à des moments prévus pour alimenter un courant vers les enroulements de stator multi-phase (W), les moments prévus étant basées sur un signal électrique circulant dans l'enroulement destiné à la détection (51) du dispositif de détection de position du rotor (50, 350), le signal électrique variant en fonction d'une variation de l'état magnétique provoquée par le mouvement, ensemble avec la rotation en avant du vilebrequin (5), de la pluralité de parties d'objet de détection (38, 238, 338) présentant, chacune, le même rapport de position par rapport à l'une correspondante des paires de faces de pôle magnétique (37p).

4. Unité de moteur (EU) selon l'une quelconque des revendications 1 à 3, dans laquelle
le dispositif de commande (CT) comporte:
la pluralité de parties d'objet de détection (38, 238, 338) prévues sur une surface extérieure du rotor extérieur (30, 330), la pluralité de parties d'objet de détection (38, 238, 338) étant disposées à des intervalles angulaires de [360 degrés/(un diviseur positif du nombre de paires de faces de pôle magnétique (37p), le diviseur positif étant supérieur à un)] par rapport à la direction circonférentielle; et
le dispositif de détection de position de rotor (50, 350) prévu en une position faisant face à chacune de la pluralité de parties d'objet de détection (38, 238, 338) pendant la rotation du rotor extérieur (30, 330), la pluralité de parties d'objet de détection (38, 238, 338) étant prévues sur la surface extérieure du rotor extérieur (30, 330) à des intervalles angulaires de [360 degrés/(un diviseur positif du nombre de paires de faces de pôle magnétique (37p), le diviseur positif étant supérieur à un)] par rapport à la direction circonférentielle, le dispositif de détection de position de rotor (50, 350) comportant un enroulement destiné à la détection (51) prévu séparément des enroulements de stator,
le dispositif de commande (CT) accélère la rotation en avant du vilebrequin (5) en effectuant une opération de marche/arrêt de la pluralité de parties de commutation (611 à 616) à des moments prévus pour alimenter un courant vers les enroulements de stator multi-phase (W), les moments prévus étant basées sur un signal électrique circulant dans l'enroulement destiné à la détection (51) du dispositif de détection de position du rotor (50, 350), le signal électrique variant en fonction d'une variation de l'état magnétique provoquée par le mouvement, ensemble avec la rotation en avant du vilebrequin (5), de la pluralité de parties d'objet de détection (38, 238, 338) prévues sur la surface extérieure du rotor extérieur (30, 330) à des intervalles angulaires de [360 degrés/(un diviseur positif du nombre de paires de faces de pôle magnétique (37p), le diviseur positif étant supérieur à un)] par rapport à la direction circonférentielle.

5. Unité de moteur (EU) selon l'une quelconque des revendications 1 à 4, dans laquelle
le dispositif de commande (CT) comporte:
la pluralité de parties d'objet de détection (38, 238, 338) prévues sur une surface extérieure du rotor extérieur (30, 330), la pluralité de parties d'objet de détection (38, 238, 338) étant espacées d'une pluralité d'intervalles sensiblement égaux et d'un intervalle différent de la pluralité d'intervalles sensiblement égaux; et
le dispositif de détection de position de rotor (50, 350) prévu en une position faisant face à chacune des parties d'objet de détection (38, 238, 338) pendant la rotation du rotor extérieur (30, 330), la pluralité de parties d'objet de détection (38, 238, 338) étant espacées de la pluralité d'intervalles sensiblement égaux et de l'intervalle différent de la pluralité d'intervalles sensiblement égaux, le dispositif de détection de position de rotor (50, 350) comportant un enroulement destiné à la détection (51) prévu séparément des enroulements du stator,
le dispositif de commande (CT) accélère la rotation en avant du vilebrequin (5) en effectuant une opération de marche/arrêt de la pluralité de parties de commutation (611 à 616) à des moments prévus pour alimenter un courant vers les enroulements de stator multi-phase (W), les moments prévus étant basés sur un signal électrique circulant dans l'enroulement destiné à la détection (51) du dispositif de détection de position de rotor (50, 350), le signal électrique variant en fonction d'une variation de l'état magnétique provoquée par le mouvement, ensemble avec la rotation en avant du vilebrequin (5), de la pluralité de parties d'objet de détection (38, 238, 338) qui sont espacées de la pluralité d'intervalles sensiblement égaux et de l'intervalle différent de la pluralité d'intervalles sensiblement égaux.

6. Unité de moteur (EU) selon l'une quelconque des revendication 1 à 5, dans laquelle
le dispositif de commande (CT) accélère la rotation en avant du vilebrequin (5) en effectuant une opération de marche/arrêt de la pluralité de parties de commutation (611 à 616) à des moments correspondant à une conduction de 120 degrés pour alimenter un courant vers les enroulements de stator multi-phase (W), sur base d'un signal électrique circulant dans l'enroulement destiné à la détection (51) du dispositif de détection de position (50, 350) de rotor (30, 330), le signal électrique variant en fonction d'une variation de l'état magnétique provoquée par le mouvement de la pluralité de parties d'objet de détection (38, 238, 338) ensemble avec la rotation en avant du vilebrequin (5).

7. Unité de moteur (EU) selon l'une quelconque des revendications 1 à 5, dans laquelle
le dispositif de commande (CT) accélère la rotation en avant du vilebrequin (5) en effectuant une opération de marche/arrêt de la pluralité de parties de commutation (611 à 616) par commande vectorielle pour alimenter un courant vers les enroulements de stator multi-phase (W), sur base d'un signal électrique circulant dans l'enroulement destiné à la détection (51) du dispositif de détection de position du rotor (50, 350), le signal électrique variant en fonction d'une variation de la condition magnétique provoquée par le mouvement de la pluralité de parties d'objet de détection (38, 238, 338) ensemble avec la rotation en avant du vilebrequin (5).

8. Unité de moteur (EU) selon l'une quelconque des revendications 1 à 7, dans laquelle
le dispositif de commande (CT) comporte un moyen de commande de combustion (63) qui commande la combustion du corps de moteur à quatre temps (E),
après être passé du mode de commande pour faire démarrer la rotation en avant du vilebrequin (5) au mode de commande pour accélérer la rotation en avant du vilebrequin (5), le dispositif de commande (CT) commande le moyen de commande de combustion (63) sur base d'un signal électrique dans l'enroulement destiné à la détection (51) du dispositif de détection de position de rotor (50, 350), le signal électrique variant en fonction d'une variation de condition magnétique provoquée par le mouvement de la pluralité de parties d'objet de détection (38, 238, 338) prévues sur le rotor (30, 330).

9. Unité de moteur (EU) selon l'une quelconque des revendications 1. à 8, dans laquelle
après être passé du mode de commande pour faire démarrer la rotation en avant du vilebrequin (5) au mode de commande pour accélérer la rotation en avant du vilebrequin (5) et faire démarrer la combustion du corps de moteur à quatre temps (E), le dispositif de commande (CT) commande un courant alimenté de la pluralité d'enroulements de stator vers la batterie (14) en effectuant une opération de marche/arrêt de la pluralité de parties de commutation (611 à 616) sur base d'un signal électrique dans l'enroulement destiné à la détection (51) du dispositif de détection de position de rotor (50, 350), le signal électrique variant en fonction d'une variation de l'état magnétique provoquée par le mouvement de la pluralité de parties d'objet de détection (38, 238, 338) prévues sur le rotor (30, 330).

10. Unité de moteur (EU) selon l'une quelconque des revendications 1 à 9, dans laquelle
pendant une période prédéterminée après le démarrage de la combustion du corps de moteur à quatre temps (E), le dispositif de commande (CT) accélère la rotation en avant du vilebrequin (5) en effectuant une opération de marche/arrêt de la pluralité de parties de commutation (611 à 616) à des moments prévus pour alimenter un courant vers les enroulements de stator multi-phase (W), les moments prévus étant basés sur un signal électrique circulant dans l'enroulement destiné à la détection (51) du dispositif de détection de position de rotor (50, 350), le signal électrique variant en fonction d'une variation de l'état magnétique provoquée par le mouvement.

11. Véhicule (A) comprenant l'unité de moteur (EU) selon l'une quelconque des revendications 1 à 10.
